# EUROPÄISCHE PATENTSCHRIFT

(11) **EP 3 746 416 B1**
(45) Veröffentlichungstag und Bekanntmachung des Hinweises auf die Patenterteilung: **25.11.2026**
(21) Anmeldenummer: 19701297.4
(22) Anmeldetag: 10.01.2019
(51) Int. Cl.: C05B 9/00, C05B 17/00, C05B 19/00

(54) **PEDOSPHÄRENVERBESSERNDES GRANULAT, SEINE HERSTELLUNG UND VERWENDUNG**
PEDOSPHERE-IMPROVING GRANULES, PRODUCTION AND USE THEREOF
GRANULAT AMÉLIORANT LA PÉDOSPHÈRE, SA FABRICATION ET SON UTILISATION

(30) Priorität: 01.02.2018 DE 102018102229; 05.03.2018 DE 102018104918
(43) Veröffentlichungstag der Anmeldung: 09.12.2020
(73) Patentinhaber: Pontes pabuli GmbH, 04107 Leipzig (DE)
(72) Erfinder: BOHNDICK, Fred, 39638 Gardelegen OT Jävenitz (DE); HOGER, Matthias, 04571 Rötha OT Espenhain (DE)
(74) Vertreter: Hertin und Partner Rechts- und Patentanwälte PartG mbB
(86) Internationale Anmeldenummer: PCT/EP2019/050543
(87) Internationale Veröffentlichungsnummer: WO 2019/149495

(56) Entgegenhaltungen:
- EP-A1- 3 293 165
- EP-A2- 1 134 206
- WO-A1-2017/093570
- DE-A1- 102010 034 042
- DE-A1- 102014 013 078
- US-A1- 2011 230 353
- US-A1- 2016 130 191

## Beschreibung

Die Erfindung betrifft ein pedosphärenverbesserndes Granulat und seine Verwendung zur Verbesserung organischer Stoffkreisläufe, insbesondere die Verwendung als dünge- und bodenverbessernde Substanzen, die zum einen den Phosphatkreislauf in der Pedosphäre optimieren und zum anderen die Anzahl der nützlichen Bodenorganismen erhöhen. Die Erfindung betrifft auch ein Verfahren zur Herstellung der erfindungsgemäßen Granulate.

### Stand der Technik:

Durch landwirtschaftliche Nutzung werden dem Boden mineralische Rohstoffe, wie beispielsweise phosphorhaltige Verbindungen entzogen, welche durch anschließende Zufuhr mineralischer Dünger wieder ausgeglichen werden müssen. Mit der stofflichen und energetischen Nutzung von Biomasse, wie beispielsweise aus Haushaltsabfällen oder Klärschlamm, ist ein Entzug von Nährstoffen und erhebliche Mengen an organischer Substanz aus den natürlichen Stoffkreisläufen verbunden. Die fehlende Humuswirkung durch diese organischen Reststoffe sollte gerade in Anbetracht des zunehmenden Anbaus von Energiepflanzen nicht vernachlässigt werden. Die Erhaltung der Fruchtbarkeit des Bodens durch den Einsatz von künstlichen Mineraldüngern aus fossilen Ressourcen ist ökologisch kritisch zu bewerten, zum einen aufgrund des umweltzerstörerischen Abbaus und zum anderen aufgrund des Schwermetalleintrags auf die Böden durch Mineraldünger. Phosphor ist ein limitierter Rohstoff und seine effiziente Nutzung für einen fruchtbaren Boden vor dem Hintergrund einer wachsenden Weltbevölkerung ist von großer Bedeutung. Unter Gesichtspunkten der Nachhaltigkeit rückt die Schließung von natürlichen Nährstoffkreisläufen immer mehr in den Vordergrund und bietet zudem eine einheimische bisher nur bedingt genutzte Rohstoffquelle.

Im Arbeitsfeld des Phosphorrecyclings haben sich zahlreiche Verfahren herausgebildet, die an sehr unterschiedlichen Stellen des Abfallstroms ansetzen und einen sehr unterschiedlichen Umsetzungsstand erreicht haben. Den größten Umsetzungsgrad haben derzeit P-Eliminationsverfahren im Klärwerk erreicht. Der wirtschaftliche Vorteil dieser Verfahren besteht insbesondere für den Betrieb der Anlagen durch die Vermeidung von Unterhaltskosten und Betriebsstörungen durch die Reduktion von spontanen Struvit-Ausfällungen in Rohrleitungen und eine bessere Entwässerung mit entsprechend geringerer Klärschlamm-Menge mit positivem Einfluss auf Klärschlamm-Entsorgungskosten. Bei der Phosphorelimination in der Abwasserreinigung resultieren Kristallisationsprodukte, wie überwiegend Struvit, wobei Struvit im Sinne der Erfindung bevorzugt auch als **MAP** bezeichnet wird. **MAP** als Recyclingprodukt kann lediglich als Düngemittel genutzt werden, problematisch ist aber, dass **MAP** in dieser Nährstoffzusammensetzung keinem boden- und pflanzenspezifischen Standarddünger entspricht. Folglich besteht im Markt beim **MAP** nicht die Akzeptanz für ein hochwertiges Düngeprodukt entsprechend der Nährstoffkomponenten, sondern vielmehr das Image eines Ab-Produktes mit entsprechend niedrigen Marktpreisen.

Organische Reststoffe, wie beispielsweise Klärschlamm, Gärreste oder Gülle, sind prinzipiell eine kostengünstige und nachhaltige Alternative zu mineralischen Düngern und damit zur Schließung des Nährstoffkreislaufs. So werden diese organischen Reststoffe zum Teil auch noch immer direkt auf Felder ausgebracht. Seit geraumer Zeit sinkt die Akzeptanz für diesen Verwertungsweg jedoch progressiv, da das direkte Ausbringen zu unerwünschter Geruchsbelästigung führt und die hiermit verbundenen Kreisläufe in Verdacht stehen, zu einer unerwünschten Aufkonzentrierung bestimmter Substanzen zu führen wie beispielsweise perfluorierter Tenside (PFT). Klärschlamm, der keiner hygienisierenden Behandlung unterworfen wurde, kann eine Vielzahl seuchen- und phytohygienisch relevanter Krankheitserreger enthalten, wie Bakterien, Viren, Parasiten und Wurmeier. Zudem sind die Ausbringzeiten stark limitiert, was bei kontinuierlich anfallenden Reststoffen zu erheblichen logistischen Schwierigkeiten führt. Sollen die organischen Reststoffe in der Landwirtschaft verwertet werden, so besteht grundsätzlich die Gefahr, dass Krankheitserreger über Nahrung und Futtermittel zu Mensch und Tier gelangen und diese damit gefährden. Da der Erreger eine hohe Überlebensfähigkeit aufweist, muss für die Risikominimierung den Hygieneaspekten eine hohe Bedeutung beigemessen werden, um mögliche Risiken für Menschen und Nutztiere zu minimieren. Ziel einer Hygienisierung ist die Unterbrechung von Infektionskreisläufen durch Abtötung von Krankheitserregern. Durch die Abtötung von Bakterien wird zudem der Verbreitung von Antibiotikaresistenzen entgegengewirkt. Hygienisierungsverfahren können auch anderen Prozesszielen der Schlammbehandlung, z. B. Stabilisierung, Entwässerung, Nachkonditionierung, dienen. Andererseits besitzen verschiedene Klärschlammbehandlungsverfahren hygienisierende Wirkung.

Die organischen Reststoffe fallen - mit jahreszeitlicher Schwankung der Zusammensetzung - über das gesamte Jahr an, ein landwirtschaftlicher Einsatz ist jedoch nur zu bestimmten Zeitpunkten im Jahr möglich, nämlich im Frühjahr oder Herbst. Bei einem direkten Ausbringen von Klärschlamm auf Felder besteht das Problem, die Klärschlämme zwischenlagern zu müssen, wenn sie zu einer Zeit anfallen, in denen sie nicht auf Felder aufgebracht werden können. Dazu kommt, dass in Gebieten mit intensiver Tierhaltung häufig so viel Mist, Gülle und verunreinigte Einstreu anfällt, dass eine vollständige Verwendung als Dünger vor Ort nicht möglich ist. Biomasse, insbesondere Gülle, wird oft in Biogasanlagen vergoren. Auch die Menge an anfallenden Gärresten aus Biogasanlagen ist in Gebieten mit intensiver Tierhaltung zu groß, um sie als Dünger direkt vor Ort auf die Felder zu bringen. All dies sind erhebliche Probleme, da die organischen Reststoffe im Grunde nur sehr begrenzt lagerfähig sind. Der Transport in andere Gebiete ist aufwendig und teuer.

Es sind im Stand der Technik Verfahren bekannt, bei denen die organischen Reststoffe deshalb getrocknet, granuliert und anschließend als Dünger gezielt eingesetzt werden. Einen solchen Weg zeigt beispielsweise DE 10 2014 013 078 A1 auf, wo phosphorhaltigem Klärschlamm getrocknet und granuliert wird und ein phosphorhaltiger organischer Dünger aus getrocknetem Klärschlamm erhalten wird. Nachteil dieser Verfahren ist jedoch, dass der resultierende organische Dünger in der Nährstoffzusammensetzung dem Klärschlamm entspricht und damit nicht optimal auf die pflanzen- und bodenspezifischen Anforderungen eingestellt ist. Zudem sind diese organischen Dünger hergestellt weitgehend aus organischen Reststoffen, die üblicherweise einen Anteil organischer Reststoffe > 80% aufweisen, wenig lagerstabil und entwickeln durchaus erhebliche Geruchsbeeinträchtigung.

Aktuell gewinnt die thermische Verwertung dieser organischen Reststoffe weiter an Bedeutung. Aschen aus der thermischen Verwertung und/oder Verbrennung organischer Reststoffe sind aufgrund des hohen Gehalts an Nährstoffen, wie beispielsweise Phosphor (P), geeignete Rohstoffquellen. Aufgrund der schlechten Pflanzenverfügbarkeit des in den Aschen enthaltenen Phosphors (P) sowie eventueller Schadstoffgehalte ist jedoch eine direkte Verwendung der Aschen als Düngemittel nur bedingt möglich. Deshalb werden aktuell solche Aschen zumeist deponiert oder im Landschaftsbau verwendet und stehen somit den Stoffkreisläufen nicht mehr als Rohstoffquelle zur Verfügung.

Im Stand der Technik sind auch unterschiedliche Verfahren zur stofflichen Verwertung von phosphorhaltigen Aschen, beispielsweise aus Klärschlamm, bekannt. Die Verfahren basieren auf dem Rohstoff Asche, wobei der P-Gehalt in der Asche möglichst hoch sein sollte. Die Verfahren unterscheiden sich bezüglich der P-Abscheidung, der Säure und/oder dem Fällmittel, dem Recyclingprodukt und der Art der Schwermetallabscheidung. Die Verfahren zur Gewinnung von Phosphat aus Klärschlammaschen können allgemein in thermochemische, thermoelektrische und nasschemische Ansätze untergliedert werden, wobei thermochemische Verfahren vorzugsweise bei Temperaturen unterhalb des Ascheschmelzpunktes <1.000°C erfolgen, thermoelektrische Verfahren bei Temperaturen oberhalb des Ascheschmelzpunktes >1.000 °C.

Bei den nasschemischen Verfahren werden zahlreiche unterschiedliche Konzepte verfolgt, wobei generell zwischen Verfahren, bei denen die Säure nur mit der Asche vermischt und Verfahren bei welchem Phosphor aus der Asche extrahiert und damit in die flüssige Phase gebracht wird, unterschieden. Viele dieser nasschemischen Verfahren (wie BioCon-, SEPHOS-, SESALPhos-, Tetraphos, PASCH- oder Leachphos-Verfahren etc.) basieren hingegen auf aufwendigen und komplexen Fällungs- bzw. Extraktionsprozessen. Klärschlammaschen unterliegen jedoch einer erheblichen Schwankung der chemischen und mineralogischen Konstitution und das ist das Gegenteil von dem, was komplexe Fällungs- und Extraktionsprozesse benötigen. Die Löse-, Fällungs- und Extraktionsbedingungen müssen im technischen Betrieb auf diese starke Schwankungsbreite sofort und zielgenau angepasst werden, was technisch und analytisch kaum zu leisten ist. Die Konsequenz ist eine verminderte Performance dieser Verfahren. Kostentreiber bei diesen Verfahren ist der erhebliche Einsatz von zusätzlichen Chemikalien. Zudem fallen erhebliche Mengen an Abfallstoffen, d.h. nicht gelöster Asche oder Fällungsprodukte etc., an, die kostenaufwendig entsorgt werden müssen. Die komplexe und aufwendige Prozessführung sowie die Chemikalien- und Entsorgungskosten können nicht durch die Verkaufserlöse der Produkte kompensiert werden.

Wirtschaftlich und technisch gut beherrschbar sind nasschemische Verfahren, bei denen die phosphathaltigen Aschen und Mineralsäuren weitgehend direkt vermischt und daraus Düngemittel hergestellt werden. Dabei wird das weitgehend unlösliche Phosphat aus phosphathaltigen Aschen mittels Mineralsäure aufgeschlossen. Solch ein Verfahren ist beispielsweise aus DE 10 2010 034 042 B4 bekannt. Das Verfahren stellt durch das Mischen von Aschen aus der Klärschlamm-Monoverbrennung mit Mineralsäure mit Zusatz von Kalium- und/oder eines Stickstoffträgers ein Phosphat- bzw. Mehrnährstoff-Düngemittel her. Die Mineralsäure schließt dabei die schwerlöslichen Phosphatverbindungen in der Klärschlammasche auf. Dabei laufen die gewünschten Umwandlungsreaktionen und die Granulation weitgehend zeitgleich ab. Die Mischung, die Reaktion und die Granulation finden in einer Mischapparatur statt. Vorgeschlagen werden dazu Pflugscharmischer mit Messersatz, ein kontinuierlich arbeitender Durchlaufmischer oder ein Doppelwellenpaddelmischer. Bei dieser Art nasschemischer Verfahren wie in DE 10 2010 034 042 ist die resultierende Nährstoffzusammensetzung an die Boden- und Pflanzenbedürfnisse anpassbar. Jedoch ist zumeist die Granulatstruktur sehr kompakt und damit die Nährstofffreisetzung oft nicht optimal an den zeitlichen Nährstoffbedarf der Pflanzen angepasst. Zudem bieten diese Düngegranulate im Grunde keine Funktion zur Bodenverbesserung, sondern dienen fast ausschließlich der Nährstoffzuführung. WO 2017/093570 A1 offenbart die Herstellung von Düngemittelgranulaten aus Tiermehlasche und Fleischasche.

Der vorliegenden Erfindung liegt die Aufgabe zugrunde, eine Substanz, insbesondere in Form eines Granulates bereitzustellen, die die Eigenschaften der Pedosphäre verbessert. Diese Verbesserung betrifft insbesondere die Phosphat-/Phosphorversorgung des Bodens, die Verbesserung der Bodenstruktur und weiterhin die Optimierung der im Boden enthaltenen Bodenorganismen.

### Beschreibung der Erfindung:

Die Aufgabe wird durch die Merkmale der unabhängigen Ansprüche gelöst. Zweckmäßige Ausgestaltungen der Erfindung ergeben sich aus den Merkmalen der Unteransprüche. Außerdem werden das so erzeugte Granulat und dessen Verwendung beansprucht. Die Erfindung betrifft insbesondere ein bodenverbesserndes Granulat gemäss Anspruch 1 mit einem Phosphatanteil, der größer als 60 % neutral-ammoniumcitratlöslich ist, gelöst, wobei das Granulat durch folgende Schritte herstellbar ist:
▪ Erzeugung einer Gesamtdispersion, umfassend mindestens einen kohlenstoffhaltigen Strukturstoff wie in Anspruch 1 definiert mit mindestens einem Kohlenstoffanteil von grösser 5 % und
▪ weiterhin umfassend mindestens ein anorganisches Sekundärphosphat wie in Anspruch 1 definiert in Kombination mit mindestens einem Reaktionsmittel oder mindestens ein Struvit wie in Anspruch 1 definiert und
▪ Durchführung einer Granulierung oder Extrudierung.

Die Aufgabe wird insbesondere dadurch gelöst, dass aus mindestens einem kohlenstoffhaltigen Strukturstoff und mindestens einem anorganischen Sekundärphosphat in Kombination mit einem Reaktionsmittel und gegebenenfalls Wasser und gegebenenfalls weiteren Komponenten ein Granulat erzeugt wird, wobei das anorganische Sekundärphosphat als Nährstofflieferant für das erzeugte Düngegranulat dient/dienen, wobei bei Einsatz eines anorganischen Sekundärphosphates die Neutral-ammoniumcitratlöslichkeit des damit zugeführten Phosphats durch Reaktion mit mindestens einem Reaktionsmittel erhöht wird. Ein weiterer Vorteil der Erfindung besteht darin, dass das gebildete Granulat mindestens einen Kohlenstoffanteil aufweist, der aus dem kohlenstoffhaltigen Strukturstoff stammt, wobei der Kohlenstoffanteil des kohlenstoffhaltigen Strukturstoffs mindestens 5 % beträgt. Darüber hinaus ist der enthaltene P2O5-Anteil im Granulat größer 60 % neutral-ammoniumcitratlöslich. Das bedeutet mit anderen Worten dass erfindungsgemäss mehr als 60 % des im Granulat enthaltenen P2O5-Anteils neutral-ammoniumcitratlöslich ist. Durch das erfindungsgemäß vorgesehene Zufügen eines kohlenstoffhaltigen Strukturstoffs wird die Struktur der Düngegranulate auf eine besonders gute Düngewirkung ausgerichtet und neben der Düngewirkung dadurch eine gezielte Bodenverbesserung erreicht.

Alle Prozentangaben (%) beziehen sich nachfolgend auf Gewichtsprozent (Gew.-% d. h. % w/w), wenn nicht anders angegeben.

Die Erfindung betrifft insbesondere ein pedoshärenverbesserndes Granulat, das einen Phosphatanteil aufweist, von dem ein Anteil von mehr als 60 % Neutral-Ammoniumcitrat löslich ist. Dieses Granulat kann mit einem Verfahren hergestellt werden, das die folgenden Schritte umfasst:
▪ Erzeugung einer Gesamtdispersion, umfassend mindestens einen kohlenstoffhaltigen Strukturstoff mit mindestens einem Kohlenstoffanteil von grösser 5 % und
▪ weiterhin umfassend mindestens ein anorganisches Sekundärphosphat in Kombination mit mindestens einem Reaktionsmittel und
▪ Durchführung einer Granulierung oder Extrudierung.

In einem weiteren Aspekt betrifft die Erfindung ein Verfahren wie in Anspruch 2 definiert zur Herstellung eines pedoshärenverbesserndes Granulats mit einem Phosphatanteil, der größer als 60 % Neutral-Ammoniumcitrat löslich ist. Das Verfahren umfasst die folgenden Schritte:
▪ Erzeugung einer Gesamtdispersion, umfassend mindestens einen kohlenstoffhaltigen Strukturstoff wie in Anspruch 2 definiert mit mindestens einem Kohlenstoffanteil von grösser 5 % und
▪ weiterhin umfassend mindestens ein anorganisches Sekundärphosphat wie in Anspruch 2 definiert in Kombination mit mindestens einem Reaktionsmittel wie in Anspruch 2 definiert und
▪ Durchführung einer Granulierung oder Extrudierung.

Es ist im Sinne der Erfindung bevorzugt, dass die hinsichtlich des Granulats oder des Verfahrens beschriebenen Definitionen, technischen Wirkungen oder Vorteile für alle der Aspekte der Erfindung gelten und jeweils auch für alle Aspekte der Erfindung offenbart sein sollen, so dass wechselseitig darauf Bezug genommen werden kann.

In einer bevorzugten Ausführungsform der Erfindung werden mindestens ein anorganisches Sekundärphosphat und mindestens ein Reaktionsmittel einer Grunddispersion zugeführt, wobei eine Inkubationszeit zwischen anorganischem Sekundärphosphat und Reaktionsmittel zwischen 10 bis 500 Minuten eingehalten wird, wodurch die Neutralammoniumcitratlöslichkeit des mit dem anorganischen Sekundärphosphats zugeführten Phosphats durch Reaktion mit dem mindestens einem Reaktionsmittel erhöht wird und der P2O5-Anteil aus dem anorganischen Sekundärphosphat im Düngergranulat größer 60 % neutral-ammoniumcitratlöslich ist.

Es ist im Sinne der Erfindung darüber hinaus bevorzugt, dass das pedoshärenverbessernde Granulat einen Kohlenstoffanteil von 5 bis 50 % enthält. Mit anderen Worten liegt ein Kohlenstoffanteil des pedoshärenverbessernden Granulats vorzugsweise in einem Bereich zwischen 5 und 50 %. Es ist in einer anderen Ausführungsform der Erfindung bevorzugt, dass das pedoshärenverbessernde Granulat einen Kohlenstoffanteil von 0,1 bis weniger 5 % enthält. Vorzugsweise sind in der Gesamtdispersion in Summe 1 bis 70 % Kristallisationsprodukte bezogen auf das fertige pedosphärenverbessernde Granulate aus einer Phosphorelimination enthalten.

Es ist im Sinne der Erfindung bevorzugt, dass eine Trocknung der aus der Grund- oder Gesamtdispersion erzeugten Granulat bzw. Grüngranulat oberhalb 100°C bezogen auf die Materialtemperatur bei der Trocknung erfolgt, wenn Kristallisationsprodukte enthalten sind.

Vorzugsweise liegt ein pH-Wert der Gesamtdispersion in einem Bereich von 4 - 8. Es ist mit anderen Worten bevorzugt, dass die Gesamtdispersion einen pH-Wert in einem Bereich zwischen 4 und 8 aufweist. Es ist im Sinne der Erfindung darüber hinaus bevorzugt, dass sich nach der Granulierung eine Fraktionierung des erzeugten pedosphärenverbessernden Granulats anschließt, wobei eine Grobfraktion und/oder eine Feinfraktion aufgemahlen und der Grunddispersion, der Gesamtdispersion und/oder der Granulierung zumindest teilweise zuführbar ist. Es ist mit anderen Worten bevorzugt, dass bei dem vorgeschlagenen Verfahren eine Fraktionierung des erzeugten pedosphärenverbessernden Granulats erfolgt, wobei diese Fraktionierung insbesondere nach der Granulierung vorgesehen ist. Bei der Fraktionierung werden die Grobfraktion und/oder die Feinfraktion vorzugsweise aufgemahlen, wobei das aufgemahlene Material der Grunddispersion, der Gesamtdispersion und/oder der Granulierung zugefügt werden kann.

Es ist im Sinne der Erfindung bevorzugt, dass eine erdfeuchte Gesamtdispersion mit einem Feuchtegehalt von 5 % bis 40 % erzeugt wird. Es ist im Sinne der Erfindung darüber hinaus bevorzugt, dass die Granulierung mit einem Granulierteller oder Intensivmischer erfolgt. Es kann im Sinne der Erfindung auch bevorzugt sein, dass eine Gesamtdispersion in Form einer Suspension mit einem Feststoffgehalt von weniger als 60 % erzeugt wird und die Granulierung in einem Wirbelschicht- oder Strahlschichtreaktor erfolgt.

In einem weiteren Aspekt betrifft die Erfindung die Verwendung einer Vorrichtung zur Herstellung des vorgeschlagenen pedosphärenverbessernden Granulats, wobei die Vorrichtung mindestens folgende Elemente umfasst.
▪ einen ersten Mischbehälter, in dem oder denen zumindest ein kohlenstoffhaltiger Strukturstoff und weiterhin mindestens ein anorganisches Sekundärphosphat in Kombination mit mindestens einem Reaktionsmittel zuführbar und mischbar ist, wobei im Falle der Zuführung von einem anorganischen Sekundärphosphat in Kombination mit einem Reaktionsmittel für die erforderliche Inkubationszeit entweder dieser erste Mischbehälter genutzt wird und/oder dafür weitere Behälter vorgesehen sind, in die die Grund- oder Gesamtdispersion für die Inkubationszeit überführt wird und gemischt werden kann,
▪ mindestens eine Granulier- und/oder Extrudiereinheit zum Granulieren oder Extrudieren der Gesamtdispersion, wobei diese Granulier- und/oder Extrudiereinheit entweder der erste Mischbehälter oder in oder an diesem integriert sein kann oder von dem ersten Mischbehälter separat ist, wobei bei einer vom ersten Mischbehälter separaten Granulier- und/oder Extrudiereinheit mindestens eine Zuführungseinheit der Grunddispersion oder Gesamtdispersion an der Granulier- und/oder Extrudiereinheit vorhanden ist und mindestens eine weitere Zuführungseinheit für weitere Komponenten sein kann.

Es ist im Sinne der Erfindung bevorzugt, dass die Granulier- und/oder Extrudiereinheit ein Intensivmischer, ein Granulierteller oder ein Wirbelschicht- oder Strahlschichtreaktor ist. Es kann im Sinne der Erfindung auch bevorzugt sein, dass an die Granulier- und/oder Extrudiereinheit eine Trocknungseinheit zur Trocknung der erzeugten Granulate und/oder Extrudate anschließt oder daran integriert ist. Mit anderen Worten ist es im Sinne der Erfindung bevorzugt, dass die Granulier- und/oder Extrudiereinheit eine Trocknung der erzeugten Granulate und/oder Extrudate umfasst.

In einem weiteren Aspekt betrifft die Erfindung ein beschichtetes oder unbeschichtetes Düngergranulat, Düngergranulat wie in Anspruch 13 definiert wobei das Düngergranulat mindestens ein anorganisches Sekundärphosphat umfasst, sowie einen größer 60 % neutral-ammoniumcitratlöslichen P2O5-Anteil bezogen auf den Gesamtphosphatgehalt im Düngergranulat. Es ist im Sinne der Erfindung so, dass das beschichtete oder unbeschichtetes Düngergranulat dadurch gekennzeichnet ist, dass das Düngergranulat mindestens ein anorganisches Sekundärphosphat einen größer 60 % neutral-ammoniumcitratlöslichen und kleiner 40 % wasserlöslichen P2O5-Anteil bezogen auf den Gesamtphosphatgehalt im Düngergranulat aufweist. Mit anderen Worten ist es erfindungsgemäss so, dass das Düngergranulat einen P2O5-Anteil umfasst, wobei mehr als 60 % des P2O5-Anteils neutral-ammoniumcitratlöslich ausgebildet ist und weniger als 40 % des P2O5-Anteils wasserlöslich ausgebildet sind. Die her genannten Prozentangaben sind vorzugsweise bezogen auf den Gesamtphosphatgehalt im Düngergranulat.

Es ist im Sinne der Erfindung bevorzugt, dass das Düngergranulat in Summe 0,1 bis 25 % Huminsäure, Fulvosäure, deren Salze und/oder in Summe 0,1 bis 30 % organische Säure und/oder ein oder mehrere Kristallisationsprodukte aus der Phosphorelimination einen Konzentrationsbereich zwischen 1 bis 70 % aufweist. Bei den Salzen kann es sich insbesondere um Humate und/oder Fulvate handeln.

In einem weiteren Aspekt betrifft die Erfindung die Verwendung des vorgeschlagenen Düngergranulats wie in Anspruch 15 definiert zur Nährstoffzufuhr in der Land-, Forstwirtschaft und/oder im Gartenbau, wobei das Düngergranulat mindestens ein anorganisches Sekundärphosphat umfasst, sowie einen größer 60 % neutral-ammoniumcitratlöslichen P2O5-Anteil. Es ist mit anderen Worten erfindungsgemäss dass der P2O5-Anteil zu mehr als 60 % neutral-ammoniumcitratlöslich ausgebildet ist.

Die Gesamtmenge an Phosphor (P) wird mittels induktiv-gekoppelter Plasma-Atom-Emissionsspektrometrie (ICP-OES) gemäß DIN EN ISO 11885:2009 bestimmt. Dazu wird die zu bestimmende Probe zunächst mit einem Königswasseraufschluss gemäß DIN EN 13346:2001-04 aufgeschlossen. Zur Bestimmung des löslichen Phosphatanteils sind unterschiedliche Verfahren, insbesondere unterschiedliche Extraktionsverfahren bekannt. Zur Abschätzung der P-Verfügbarkeit werden dazu die Düngemittel im Labor mit unterschiedlichen Lösungsmitteln untersucht und entsprechend gekennzeichnet. Die wichtigsten eingesetzten Lösungsmittel sind Wasser, Ammoncitrat, Zitronensäure, Ameisensäure und Mineralsäuren. Auch in der EU-Verordnung über Düngemittel sind verschiedene Verfahren zur Bestimmung der Phosphatlöslichkeit von Düngemitteln normiert. Je nach Herkunft und Beschaffenheit des zu prüfenden P-Düngers kann ein unterschiedliches Verfahren zum Einsatz kommen. Zur Charakterisierung der Löslichkeit des Phosphates wird sich hier auf die drei folgenden Extraktionsverfahren beschränk: Die Extraktion des in Wasser löslichen Phosphors (P) erfolgt gemäß DIN EN15958:2011. Die Extraktion des in neutralem Ammoniumcitrat löslichen Phosphors (P) erfolgt gemäß DIN EN15957:2011. Die Extraktion des 2%iger Citronensäure löslichen Phosphors (P) erfolgt gemäß DIN EN15920:2011. Der Phosphatgehalt (P) wird anschließend mittels induktiv-gekoppelter Plasma-Atom-Emissionsspektrometrie (ICP-OES) gemäß DIN EN ISO 11885:2009 bestimmt.

Nur bei hohen Anteilen von wasser- und ammoncitratlöslichem Phosphat ist gewährleistet, dass ein großer Teil des Düngerphosphats tatsächlich kurz- und mittelfristig der Pflanze zur Verfügung steht. Der neutral-ammoncitratlösliche Phosphoranteil kann dabei als Anhaltspunkt für die mittelfristige Pflanzenverfügbarkeit des Düngephosphors herangezogen werden, d. h. über den Zeitraum von etwa einer Fruchtfolge. Der unmittelbar verfügbare P-Anteil eines Düngemittels wird durch seine Löslichkeit in Wasser beschrieben. Je höher der wasserlösliche P-Anteil, desto schneller beziehungsweise leichter die Verfügbarkeit des Dünge-P für die Pflanze. Mit stärkeren Lösungsmitteln, wie Zitronen- oder Ameisensäure, werden auch P-Anteile gelöst, die allenfalls langfristig oder nur unter bestimmten Standortbedingungen, wie tiefen pH-Werten, pflanzenverfügbar sind. Pflanz- und Vegetationsversuche haben gezeigt, dass vor allem eine gute Korrelation zwischen neutralammoncitratlöslichem Phosphatanteil und dem Wachstum der Pflanzen besteht. Der wasserlösliche Anteil der Pflanze ist hier weniger aussagekräftig. Hohe Wasserlöslichkeit stellt Phosphat sehr schnell in großen Mengen zur Verfügung, was die Pflanze unter Umständen im Wachstum gar nicht in gleicher zeitlicher Abfolge vollständig aufnehmen kann, dann also ungenutzt bleibt und gegebenenfalls ausgewaschen wird. Nach heute übereinstimmender wissenschaftlicher Meinung sollte aus Gründen des Ressourcenschutzes die Verwendung von P-Düngemitteln bevorzugt werden, die einen besonders hohen neutral-ammoncitratlöslichen Phosphatanteil aufweisen.

Düngemittel sind Stoffe oder Stoffgemische, die das Nährstoffangebot für die angebauten Pflanzen, insbesondere Kulturpflanzen, in der Land- und Forstwirtschaft sowie im Gartenbau ergänzen beziehungsweise einstellen. Sie können gegebenenfalls mit weiteren Materialien kombiniert und/oder funktionalisiert werden. Als Düngemittel werden hier sowohl Einzelnährstoffdünger, wie Phosphatdünger, als auch Mehrnährstoffdünger verstanden. Düngemittel in Granulatform, das im Sinne der Erfindung auch als Düngergranulat bezeichnet wird, ist ein Haufwerk typischerweise in annähernd sphärischer Form und ausreichender Eigenfestigkeit.

Als kohlenstoffhaltigen Strukturstoff wird ein Stoff verstanden, der einen Kohlenstoffanteil von größer 5 % aufweist, wobei diese Prozentangabe bezogen auf den getrockneten Zustand des Stoffs angegeben wird. Es kann sich beispielsweise um Torf, Humus, und/oder Biokohle aus der hydrothermalen Carbonisierung (HTC) handeln. Der Begriff "Kohlenstoffanteil" im Sinne der Erfindung wird auch definiert als die Summe aus organischem Kohlenstoff und elementaren Kohlenstoff, wobei anorganischer gebundener Kohlenstoff nicht berücksichtigt wird. Im Sinne der Erfindung wird organischer Kohlenstoff auch als *total organic carbon* (TOC) bezeichnet.

In einer bevorzugten Ausführungsform der Erfindung sind kohlenstoffhaltige Strukturstoffe Reststoffe, die bei der Aufbereitung, Zubereitung oder Herstellung, beispielsweise auch in der Landwirtschaft, von etwas entstehen. Diese Reststoffe werden im Sinne der Erfindung bevorzugt auch als Überreste bezeichnet. Solche kohlenstoffhaltigen Strukturstoffe als Reststoffe sind beispielsweise Klärschlämme, Gärreste, Gülle, aber auch Tierausscheidungen, Tier- und Fischmehl. Der Begriff "Gärrest" wird im Sinne der Erfindung als der flüssige und/oder feste Rückstand verstanden, der bei der Vergärung von Biomasse zurückbleibt. Der Begriff "Gülle" steht für ein Gemisch aus Kot und Harn von landwirtschaftlichen Nutztieren in Kombination mit Einstreu mit wechselndem Wassergehalt.

Der Begriff "kohlenstoffhaltiger Strukturstoff" steht im Sinne der Erfindung für mindesten einen kohlenstoffhaltigen Strukturstoff, wobei auch eine Kombination aus mehreren unterschiedlichen kohlenstoffhaltigen Strukturstoffen dabei ausdrücklich integriert sein kann. Einen Überblick gibt folgende Übersicht:

| Stofftyp | Anorganisch-gebundener Kohlenstoff | elementarer Kohlenstoff | Organisch gebundener Kohlenstoff |
|---|---|---|---|
| | Anorganisch | anorganisch | Organisch |
| | | | |
| Art der Atome in Verbindung | Verbindungen, die aus Kohlenstoff und anderen Atome gebildet werden | Stoffe, die nur aus Kohlenstoff gebildet werden. | Verbindungen, die aus Kohlenstoff und anderen Atome gebildet werden |
| Stoffgruppen | Oxide des Kohlenstoffs, Carbide, die Kohlensäure und Salze der Kohlensäure. | Graphit, Ruß, Aktivkohle, Graphen, Amorpher Kohlenstoff, (Diamant) | Alle Kohlenstoffverbindungen die nicht anorganisch sind. |

Der organisch gebundene Kohlenstoff im Boden, der im Sinne der Erfindung vorzugsweise auch als *Soil Organic Carbon* oder SOC bezeichnet wird, beziehungsweise der elementare Kohlenstoff des vorgesehenen kohlenstoffhaltigen Strukturstoff ist ein wichtiger Ökosystemdienstleistungen des Bodens mit den unterschiedlichen Funktionen, wie die Filterung und Speicherung von Wasser, der Aufbau und Erhalt der Bodenstruktur, die Sicherung der Nährstoffversorgung sowie die Festlegung und der Abbau von Schadstoffen verbunden. Anorganische Verbindungen des Kohlenstoffs, wie Karbonate, leisten diese bodenverbessernde Wirkung nicht.

Als anorganisches Sekundärphosphat werden im Sinne der Erfindung die Stoffe bezeichnet, die bei der Aufbereitung, Zubereitung und/oder Herstellung von Schlämmen, Produktionsabfällen, tierischen Nebenprodukten oder anderen Stoffströmen entstehen, einen Phosphoranteil von größer als 5 % P2O5 und einen Kohlenstoffanteil von kleiner als 1 % aufweisen. Erfindungsgemäss eingesetzte anorganische Sekundärphosphate sind Aschen und/oder Schlacken aus der Mono- oder Mitverbrennung von Klärschlamm, Aschen und/oder Schlacken aus der Verbrennung bzw. Mitverbrennung von Tierausscheidungen, Tiermehl, Tierreste und Tierkörper oder Aschen und/oder Schlacken aus der Verbrennung von Gülle und Gärresten als Einzelstoff bzw. Gemische daraus.

Es ist im Sinne der Erfindung bevorzugt, die Phosphorverbindungen, zum Beispiel die im anorganischen Sekundärphosphat enthaltenen sind oder mit dem Reaktionsmittel neu gebildet werden, als Phosphat zu bezeichnen, auch wenn dies in ihrer Gesamtheit in Einzelfällen nicht oder nicht vollständig der Bindungsart des Phosphors entsprechen sollte.

Unter dem Begriff "Struvit" werden im Sinne der vorliegenden Anmeldung vereinfacht alle Kristallisationsprodukte verstanden, welche beispielsweise aus der Phosphorelimination in der Abwasserreinigung erhalten werden, wobei je nach Art der Prozessführung und die Art des eingesetzten oder der eingesetzten Fällungsmittel, Flockungs- oder Kristallisationsmittel die Anteile der Elemente P, N, Mg, K, Ca schwanken und weitere Stoffe enthalten sein können. Solche Kristallisationsprodukte werden je nach Ausprägung häufig als Struvit, Brushit oder hydroxylapatitähnliche Ca-P-Phase bezeichnet. Es ist im Sinne der Erfindung bevorzugt, die Phosphorelimination auch als Phosphoreliminierung, Phosphatelimination oder P-Elimination zu bezeichnen. Unter einem Reaktionsmittel wird im Sinne der Erfindung ein Stoff oder ein Gemisch verstanden, der zumindest einen Teil des durch das anorganische Sekundärphosphat zugeführten Phosphates löst und/oder mit diesen reagiert. Erfindungsgemäss eingesetzte sind organische oder anorganische Säuren oder Säuregemische oder Laugen oder Gemische aus unterschiedlichen Laugen, jeweils in unverdünnter oder verdünnter Form.

Im vorgeschlagenen Verfahren werden mindestens ein kohlenstoffhaltiger Strukturstoff und mindestens ein anorganisches Sekundärphosphat und mit mindestens einem Reaktionsmittel vermischt. Diese Mischung wird vorzugsweise als Grunddispersion bezeichnet.

Die vorgeschlagene Grunddispersion enthält mindestens einen kohlenstoffhaltigen Strukturstoff. Je nach Art und Konzentration dieses oder dieser kohlenstoffhaltigen Strukturstoff(e) kann die Düngewirkung eingestellt und eine bodenverbessernde Wirkung beim Einsatz der Düngergranulate erzielt werden. Einen Phosphatanteil, der größer als 60 % neutral-ammoniumcitratlöslich ist, kann durch die unterschiedliche Zusammensetzung der Gesamtdispersion vorteilhafterweise frei eingestellt werden.

Die Düngewirkung wird vorteilhafterweise dadurch beeinflusst, dass durch das Zufügen des kohlenstoffhaltigen Strukturstoffs die Struktureigenschaften des erzeugten Düngemittels und damit dessen Eigenschaften, wie beispielsweise die Porosität, Größe der Poren, die Festigkeit und/oder Löslichkeit, eingestellt werden können. Dadurch kann beispielsweise die Nährstofffreisetzung gezielt an das Pflanzenwachstum und den zeitlich abhängigen Nährstoffbedarf der Pflanze angepasst werden. Eine gezielte Bodenverbesserung wird vorteilhafterweise durch das erfindungsgemäße Zufügen des mindestens einem kohlenstoffhaltigen Strukturstoffs in dem Düngegranulat dadurch erreicht, dass der kohlenstoffhaltige Strukturstoff beispielsweise zu einer Humusbildung, zur Verbesserung der Bodenstruktur und/oder zu einer Verbesserung des Luft- und Wasserhaushalt des Bodens bei Anwendung der Düngemittel in der Landwirtschaft führt. Dies kann beispielsweise das Wurzelwachstum fördern, das Bodenleben aktivieren und/oder die Pflanzenvitalität gegen Stresssituationen stimulieren.

Durch Art und Konzentration des kohlenstoffhaltigen Strukturstoffs können die Düngewirkung und/oder die bodenverbessernden Eigenschaften gezielt gewichtet werden. Dazu wird vorzugsweise der Grunddispersion der ausgewählte kohlenstoffhaltige Strukturstoffe in benötigter Konzentration zugegeben.

So beinhaltet in einer bevorzugten Ausführungsform der Erfindung die Grunddispersion so viel kohlenstoffhaltigen Strukturstoff, dass das gebildete Granulat einen Kohlenstoffanteil von größer 5 bis 50 % enthält, da überraschenderweise festgestellt wurde, dass in diesem Konzentrationsbereich insbesondere die Humusbildung sehr stark gefördert und dadurch eine besonders gute Boden- und Strukturverbesserung bewirkt wird. Besonders bevorzugt ist dabei jedoch, dass das gebildete Granulat einen Kohlenstoffanteil von größer 5 bis 25 % enthält, da unerwartet festgestellt wurde, dass gerade in diesem Bereich zusätzlich zu der Humusbildung insbesondere der Luft- und Wasserhaushalt des Bodens besonders günstig für das Wachstum von beispielsweise Wintergerste und Mais eingestellt wird.

In einer anderen bevorzugten Ausführungsform der Erfindung enthält hingegen der Grunddispersion nur so viel kohlenstoffhaltigen Strukturstoff, dass das gebildete Granulat einen Kohlenstoffanteil von 0,1 % - kleiner 5 % enthält. Durch diese verhältnismäßig geringe Konzentration können besonders viele Nährstoffkomponenten im Düngemittel integriert werden, was somit die Düngewirkung der Granulate in diesem Ausführungsfall grundsätzlich wesentlich verstärkt. Festgestellt wurde nun aber überraschenderweise, dass gerade der Kohlenstoffanteil in diesem Bereich zu einer Porenstruktur führt, die die Löslichkeit dieser Nährstoffkomponenten sehr begünstigt. Dadurch sind die Nährstoffe wesentlich besser pflanzenverfügbar. Besonders bevorzugt wird dabei ein Kohlenstoffanteil von 0,1 - 2,5 %, da gerade in diesem Bereich eine gute Porosität für eine gute Löslichkeit gegeben und zusätzlich in diesem Konzentrationsbereich eine besonders gute Verteilung kleiner Poren in der Grundstruktur gegeben sind, woraus eine besonders hohe Festigkeit resultiert.

In einer bevorzugten Ausführungsform der Erfindung ist mindestens ein kohlenstoffhaltiger Strukturstoff Klärschlamm, Gülle, Gärrest oder ein Gemisch daraus. Vorteil des Einsatzes dieser Stoffe ist, dass sie als Reststoffe besonders kostgünstig sind. Zudem können gegebenenfalls durch den Einsatz von Reststoffen ein Entsorgungsproblem gelöst und der Reststoff einer Verwertung zugeführt werden. Neben den Vorteilen der Bodenverbesserung liefern diese Stoffe als kohlenstoffhaltigen Strukturstoffe zusätzlich wertvolle und kostengünstige Nährstoffkomponenten. Außerdem werden durch den Einsatz dieser kohlenstoffhaltigen Strukturstoffe und dessen Überführung in das erfindungsgemäße Düngemittel diese Reststoffe lagerfähig gemacht. Durch das Erreichen der Lagerfähigkeit wird ein Problem umgangen, das ansonsten bei der landwirtschaftlichen Verwertung dieser Reststoffe stets ansteht. Diese Stoffe fallen über das gesamte Jahr an, ein landwirtschaftlicher Einsatz ist jedoch nur zu bestimmten Zeitpunkten im Jahr möglich, nämlich im Frühjahr oder Herbst.

Die vorgeschlagene Grunddispersion beinhaltet mindestens ein anorganisches Sekundärphosphat.

Möglich ist auch die Kombination aus mindestens einem anorganischen Sekundärphosphat und mindestens einem Struvit. Das im anorganischen Sekundärphosphat enthaltene Phosphat dient im erzeugten Düngemittel vorteilhafterweise als Nährstoffkomponente. Hohe Phosphatgehalte, insbesondere beim anorganischen Sekundärphosphat, sind im Sinne der Erfindung besonders vorteilhaft. Bevorzugt werden insbesondere anorganische Sekundärphosphate mit größer 10 % P₂O₅, besonders bevorzugt mit größer 15 % P₂O₅ und ganz besonders bevorzugt mit größer 20 % P₂O₅. Daneben kann das anorganische Sekundärphosphat weitere Komponenten enthalten. Vorteilhaft ist, wenn weitere Nährstoffkomponenten enthalten sind, so beispielsweise N, K, Mg oder andere Spurennährstoffe.

Der im anorganischen Sekundärphosphat vorhandene Phosphatanteil weist vorzugsweise eine verhältnismäßig geringe Löslichkeit auf. Entsprechend sind solche Stoffe, wie beispielsweise Klärschlammaschen, nur bedingt als Düngemittel geeignet. Typischerweise zeigen diese anorganischen Sekundärphosphate eine Wasserlöslichkeit von kleiner 30 % und eine Neutralammoniumcitratlöslichkeit von kleiner 50%, jeweils bezogen auf den Gesamtphosphatgehalt im anorganischen Sekundärphosphat, auf. Für einen sinnvollen Einsatz als Düngemittel muss dieses unzureichend lösliche Phosphat in ein besser lösliches und damit besser pflanzenverfügbares Phosphat umgewandelt werden. Die Umwandlung erfolgt erfindungsgemäß durch zumindest teilweise Reaktion des anorganischen Sekundärphosphats mit mindestens ein Reaktionsmittel. Wird zur Bildung der Grunddispersion also mindestens ein anorganisches Sekundärphosphat zugegeben, wird erfindungsgemäß auch mindestens ein Reaktionsmittel zugegeben. Das Reaktionsmittel soll zumindest einen Teil des im anorganischen Sekundärphosphat enthaltenen Phosphates lösen und/oder mit diesem so reagieren, dass ein besser neutral-ammoniumcitratlösliches Phosphat entsteht. Der Begriff "reagieren" wird im Sinne der Erfindung dahingehend verstanden, dass das Phosphat durch Reaktion umgewandelt wird. Das gegebenenfalls gelöste Phosphat bildet im anschließenden Prozess, zum Beispiel durch Fällung oder bei der Trocknung, ebenfalls ein besser neutral-ammoniumcitratlösliches Phosphat als im anorganischen Sekundärphosphat. Besser neutral-ammoniumcitratlöslich heißt im Sinne der Erfindung bevorzugt, dass die Neutralammoniumcitratlöslichkeit des Phosphates im anorganischen Sekundärphosphat nach der Reaktion mit dem Reaktionsmittel höher ist als zuvor. Der Begriff "besser neutral-ammoniumcitratlöslich" bedeutet im Sinne der Erfindung, dass die Neutralammoniumcitratlöslichkeit des Phosphates im anorganischen Sekundärphosphat nach der Reaktion mit dem Reaktionsmittel höher ist. Bevorzugt ist dabei eine Erhöhung der Neutral-ammoniumcitratlöslichkeit um größer als 20 %, besonders bevorzugt ist eine Erhöhung um größer 50 %. Ein entsprechendes Berechnungsbeispiel kann wie folgt aussehen: die Neutralammoniumcitratlöslichkeit des Phosphatanteils aus dem unbehandeltem Sekundärphosphat von 50 % wird durch die Reaktion mit dem Reaktionsmittel um 20 % auf 60% erhöht.

Durch beispielsweise die Auswahl des Reaktionsmittels, die Reaktionsführung und Reaktionszeit kann Einfluss auf die resultierende Neutralammoniumcitratlöslichkeit des anorganischen Sekundärphosphates genommen werden. Bevorzugt weißt der Phosphatanteil aus dem anorganischen Sekundärphosphat anschließend im erzeugten Granulat eine Neutralammoniumcitratlöslichkeit von größer 60 %, bevorzugt größer als 70 %, besonders bevorzugt größer als 80 % auf. Durch die bevorzugte Reaktion bzw. Umwandlung des Phosphates und die bevorzugte resultierende Neutralammoniumcitratlöslichkeit aus dem anorganischen Sekundärphosphat werden vorteilhafterweise eine bessere Phosphat-Pflanzenverfügbarkeit und damit eine verbesserte Düngewirkung erzielt.

Diese Löslichkeit liefert vorteilhafterweise ausreichend Phosphat in der Wachstumsperiode bei typischen humusreichen Böden. Festgestellt wurde nun überraschenderweise, dass auf sandigen Böden eine höhere Neutralammoniumcitratlöslichkeit von größer 70 % für eine optimale Pflanzenversorgung notwendig ist. Vermutet wird, dass solch humusarme Böden eine geringere Wasserhaltefähigkeit haben. Die Wasserhaltefähigkeit begünstigt jedoch die P-Diffusion zur Wurzel. Durch eine höhere Neutralammoniumcitratlöslichkeit kann nun vorzugsweise der bodenspezifisch reduzierte Diffusionsprozess verstärkt und die Pflanze optimal versorgt werden.

Ebenfalls unerwartet wurde weiter festgestellt, dass auf trockenen und sandigen Böden eine weitere Erhöhung der Neutral-ammoniumcitratlöslichkeit von dann größer 80 % für ein optimales Pflanzenwachstum bevorzugt ist. Eine höhere Neutralammoniumcitratlöslichkeit kann beispielsweise durch eine längere Reaktionszeit zwischen anorganischen Sekundärphosphat und Reaktionsmittel oder zum Beispiel durch eine stärkere Säure beziehungsweise eine höhere Säurekonzentration erreicht werden. Als Reaktionsmittel kommen beispielsweise phosphorhaltige Aschen und/oder Schlacken in Betracht. Durch diese Reaktion beziehungsweise Umwandlung des Phosphates und der resultierenden Neutralammoniumcitratlöslichkeit aus dem anorganischen Sekundärphosphat werden vorteilhafterweise eine bessere Phosphat-Pflanzenverfügbarkeit und damit eine verbesserte Düngewirkung erzielt.

Es ist im Sinne der Erfindung so, dass ein anorganisches Sekundärphosphat zugegeben wird, dass durch die Reaktion zwischen anorganischem Sekundärphosphat und Reaktionsmittel die Löslichkeit des Phosphates aus dem anorganischem Sekundärphosphat erhöht wird. Wie dargestellt, wird die Löslichkeit von Phosphat bei Düngemitteln mittels unterschiedlicher Methoden ermittelt. Die P-Löslichkeit wird vorzugsweise festgelegt durch die Art der P-Bindung und das Lösungsmilieu. Durch die Art der Reaktionsführung kann auf die Bindung des P, also auf die sich ausbildenden Phosphatphasen, Einfluss genommen werden. Dies kann beispielsweise durch die Art und Konzentration des Reaktionsmittels, die Reaktionszeit und/oder die Prozesstemperatur geschehen.

In einer bevorzugten Ausführungsform der Erfindung wird die Reaktionsführung vorzugsweise so gesteuert, dass der Phosphatanteil aus dem anorganischen Sekundärphosphat anschließend im erzeugten Düngergranulat eine Neutralammoniumcitratlöslichkeit von größer als 60 % und eine Wasserlöslichkeit von kleiner als 40 %, aufweist. Durch die Einstellung der Löslichkeiten in dieser Form wird vorteilhafterweise bewirkt, dass das Phosphat über etwa eine Wachstumsperiode tatsächlich auf dem Feld für die Pflanzen ausreichend gut pflanzenverfügbar ist, jedoch in dieser Zeit nicht ausgewaschen wird. Eine Auswaschung kann typischerweise erfolgen, wenn eine sehr gute Wasserlöslichkeit, also deutlich höher also erfindungsgemäß vorgesehen, vorhanden ist.

In einer besonders bevorzugten Ausführungsform der Erfindung wird für den Phosphatanteil aus dem anorganischen Sekundärphosphat im erzeugten Düngergranulat eine Neutralammoniumcitratlöslichkeit von größer als 80 % und eine Wasserlöslichkeit von kleiner als 30 % eingestellt. Überraschenderweise hat sich gezeigt, dass dadurch insbesondere Winterroggen eine besonders günstige P-Versorgung über eine Wachstumsperiode erfährt. In einer anderen besonders bevorzugten Ausführungsform der Erfindung wird für den Phosphatanteil aus dem anorganischen Sekundärphosphat im erzeugten Düngergranulat eine Neutralammoniumcitratlöslichkeit von größer als 90 % und eine Wasserlöslichkeit von kleiner als 15 % eingestellt. Dieses Verhältnis ist besonders günstig für Weizenpflanzen.

Wird zur Bildung der Grunddispersion mindestens ein anorganisches Sekundärphosphat zugegeben, wird erfindungsgemäß auch mindestens ein Reaktionsmittel zugegeben, wobei dann erfindungsgemäß die Reaktion zwischen anorganisches Sekundärphosphat und Reaktionsmittel so gesteuert wird, dass das Reaktionsmittel in ausreichender Weise mit zumindest einem Teil des durch das anorganische Sekundärphosphat zugeführten Phosphates reagiert. Der Begriff "in ausreichender Weise reagieren" bedeutet im Sinne der Erfindung bevorzugt, dass sich die gewünschte Verbesserung der Neutralammoniumcitratlöslichkeit des Phosphates einstellt. Entsprechend ist zur Reaktion eine Inkubationzeit im Sinne des Einwirkenlassens des Reaktionsmittels auf das anorganische Sekundärphosphat vorgesehen. Die Inkubation erfolgt über einen Zeitraum im Bereich von 10 bis 500 Minuten. Durch die Reihenfolge des Zusammenführens der Komponenten, der zeitlichen Abfolge und der Inkubationszeit kann vorteilhafterweise Einfluss auf die ablaufende Reaktion und somit auch auf den Anteil der gelösten Schwermetalle und die Neutralammoniumcitratlöslichkeit des Phosphates im erzeugten Düngergranulat genommen werden.

Überraschend wurde festgestellt, dass zur Erhöhung der Ammoniumcitratlöslichkeit eine verhältnismäßig kurze Verweilzeit ausreichend ist. In einer bevorzugten Ausführungsform der Erfindung wird deshalb die Inkubationszeit zwischen 10 und 60 Minuten eingestellt, um insbesondere die Ammoniumcitratlöslichkeit zu erhöhen. In einer besonders bevorzugten Ausführungsform der Erfindung wird die Inkubationszeit auf 10 bis 30 Minuten eingestellt. Hier können ebenfalls hohe Amonniumcitratlöslichkeiten erreicht werden, durch die geringere Inkubationszeit kann vorteilhafterweise die Dimensionierung der Reaktionsbehälter verkleinert werden, so dass entsprechend Prozesskosten gesenkt werden können.

Die Inkubationszeit zur Erzielung der gewünschten Löslichkeiten hängt auch beispielsweise von der Art des eingesetzten Reaktionsmittels ab. So führen starke Säuren, wie beispielsweise konzentrierte Mineralsäuren oder starke Basen, wie beispielsweise konzentriertes NaOH, typischerweise zu einer beschleunigten Reaktion, und eine kürzere Inkubationszeit ist erforderlich. Werden hingegen schwächer Säuren, wie beispielsweise organische Säuren, wie beispielsweise Zitronen- oder Oxalsäure, eingesetzt, ist eine längere Inkubationszeit erforderlich. In einer bevorzugten Ausführungsform der Erfindung wird die Inkubationszeit in einem Bereich zwischen 30 und 100 Minuten eingestellt.

Zur Erhöhung der Wasserlöslichkeit sind überraschenderweise längere Reaktionszeiten erforderlich. Deshalb wird in einer anderen bevorzugten Ausführungsform der Erfindung die Inkubationszeit zwischen 60 bis 200 Minuten eingestellt.

In einer bevorzugten Ausführungsform wird mindestens ein Reaktionsmittel verwendet, welches mindestens eines der Elementen Stickstoff (N), Schwefel (S), Kalium (K) und/oder Phosphor (P) enthält, so beispielsweise phosphorige Säure (H₃PO₃), Phosphorsäure (H₃PO₄), Salpetersäure (HNO₃), Schwefelsäure (H₂SO₄), schweflige Säure (H₂SO₃), Kalilauge (KOH). Durch die Verwendung derartige Reaktionsmittel werden entsprechend zusätzlich Nährstoffkomponenten (Stickstoff, Schwefel, Kalium und/oder Phosphor) in das Granulat eingetragen. Durch eine geeignete Reaktionsabfolge kann gegebenenfalls die Nährstoff-Bindungsform der im Reaktionsmittel enthaltenen Nährstoffe, z.B. Stickstoffs und/oder Schwefels, in eine für das Düngemittel geeignete Form umgewandelt werden.

In einer besonders bevorzugten Ausführungsform der Erfindung ist das Reaktionsmittel eine verdünnte oder unverdünnte Phosphorsäure und/oder phosphoriger Säure oder zumindest ein verdünntes oder unverdünntes Säuregemisch mit anteilig enthaltener Phosphorsäure und/oder phosphoriger Säure. Vorteil dabei ist, dass der Phosphoranteil in der Grunddispersion und damit in den daraus letztlich erzeugten Dünger durch das Reaktionsmittel erhöht wird. Damit liefert das Reaktionsmittel nicht nur einen werthaltigen Nährstoffanteil, sondern begünstigt vorteilhafterweise auch die Herstellung von Phosphatdüngern. So können beispielsweise bevorzugt Düngegranulat mit einem Gesamt-P2O5-Gehalt von größer 35 %, besonders bevorzugt größer 40 % und einem neutral-ammoniumcitratlöslichen Phosphatanteil davon von größer 80 %, besonders bevorzugt von größer 90 % erzeugt werden.

In einer anderen bevorzugten Ausführungsform der Erfindung werden Kristallisationsprodukte aus der Phosphorelimination, wie Struvit, Brushit oder hydroxyxlapatitähnliche Ca-P-Phase, in einem Bereich von 1 bis 70 %, bezogen auf das fertige pedosphärenverbessernde Granulat, so zugegeben, dass dadurch ein Nährstoffgranulat mit einem Gesamt-P2O5-Gehalt von größer als 10 %, einem neutral-ammoniumcitratlöslichen Phosphatanteil von größer 60 % davon und einer Wasserlöslichkeit von kleiner als 30%, vorzugsweise bezogen auf dem Gesamt-P2O5-Gehalt, resultiert. In einer ganz besonderen Ausführungsform der Erfindung werden Kristallisationsprodukte aus der Phosphorelimination im Bereich von 10 bis 40 %, bezogen auf das fertige pedosphärenverbessernde Granulat, zugegeben, wobei Nährstoffgranulate mit einem Gesamt-P2O5-Gehalt von größer als 15 %, mit einem neutral-ammoniumcitratlöslichen Phosphatanteil davon, bezogen auf Gesamt-P2O5, von größer als 85 % und einem wasserlöslichen Phosphatanteil, bezogen auf Gesamt-P2O5), von kleiner als 20 % jeweils auf die Zusammensetzung des Nährstoffgranulates bezogen, erhalten werden.

Das Zusammenführen der Komponenten der Grunddispersion kann auf für den Fachmann bekannte Art und Weise erfolgen. Es ist im Sinne der Erfindung bei Einsatz mindestens eines anorganischen Sekundärphosphats in der dann erfindungsgemäßen Kombination mit mindestens einem Reaktionsmittel bevorzugt, dass das Reaktionsmittel in ausreichender Weise mit zumindest einem Teil des durch das anorganische Sekundärphosphat zugeführten Phosphates reagiert. Der Begriff "in ausreichender Weise" ist dabei im Sinne der Erfindung definiert durch die gewünschte Verbesserung der Neutralammoniumcitratlöslichkeit dieses Phosphates. Durch die Reihenfolge des Zusammenführens der Komponenten und der zeitlichen Abfolge kann Einfluss auf die ablaufende Reaktion und somit auf die Neutralammoniumcitratlöslichkeit des Phosphates genommen werden. Für eine höhere Neutralammoniumcitratlöslichkeit wird beispielsweise eine längere Reaktionszeit mit dem Reaktionsmittel eingehalten oder eine stärkere Säure verwendet.

Gemäss der Erfindung wird mindestens ein anorganisches Sekundärphosphat eingesetzt und dieses mit mindestens einem Reaktionsmittel(n) gegebenenfalls in Kombination mit Wasser vermischt. Es ist im Sinne der Erfindung bevorzugt, dass das Wasser vor, mit und/oder nach dem Reaktionsmittel zugegeben wird. Dadurch reagiert zunächst das Reaktionsmittel mit zumindest Teilen des Phosphates aus dem anorganischen Sekundärphosphatungestört von anderen Komponenten. Je nach Art der Komponenten kann die Reaktion zwischen Reaktionsmittel und Phosphat aus dem anorganischen Sekundärphosphat durch diese Komponenten gestört, unterbunden oder in der Reaktionsgeschwindigkeit vermindert werden, beispielsweise wenn dadurch der pH-Wert verändert wird und/oder eine (teilweise) Neutralisation des Reaktionsmittels erfolgt. Besonders bevorzugt ist bei dieser Ausführungsform, dass der kohlenstoffhaltige Strukturstoff beziehungsweise die weiteren Komponenten erst nach 1 bis 60 Minuten, besonders bevorzugt 3 bis 30 Minuten zugegeben wird/werden. Es ist im Sinne der Erfindung bevorzugt, dass diese Zeitspannen eine Reaktionszeit oder eine Inkubationszeit zwischen anorganischem Sekundärphosphat und Reaktionsmittel darstellen.

Der erfindungsgemäßen Grunddispersion können weitere Komponenten zugegeben werden. Weitere Komponenten sind hier allgemein all diejenigen Stoffe, die die Prozessführung und/oder die Eigenschaften der Düngegranulate verbessern können, so beispielsweise nährstoffhaltige Komponenten, Dispergier- und Entschäumungsmittel, Mittel zur pH-Werteinstellung, Urease-Hemmer, Ammonium-Stabilisatoren, Huminsäure, organische Säuren und/oder Wasser. Die Grundmischung mit gegebenenfalls allen weiteren Komponenten zur Bildung der Düngemittel wird im Sinne der Erfindung bevorzugt als Gesamtdispersion bezeichnet. Die Reihenfolge der Zugabe kann dabei je nach Erfordernis der Prozessführung und/oder der eventuell gewünschten Reaktionsabfolge erfolgen. So kann beziehungsweise können beispielsweise alle oder ein Teil der weiteren Komponenten der bereits erzeugten Grunddispersion und/oder aber auch während der Erzeugung der Grunddispersion zugegebenen werden. Alternativ kann oder können alle oder ein Teil Komponenten auch vorgelegt werden und erst dazu die Grunddispersion oder die Komponenten zur Bildung der Grunddispersion zugeführt werden. Die Zugabe von weiteren Komponenten ist ein bevorzugtes Merkmal der erfindungsgemäßen Grunddispersion. Im Zusammenhang mit der bevorzugten Ausführungsform werden im Folgenden Beispiele offenbart, die den Begriff der "weiteren Komponenten" für den durchschnittlichen Fachmann in ausreichender Art und Weise offenbaren. Die weiteren Komponenten sind optional und nicht zwingend erforderlich. Für bestimmte bevorzugte Ausführungsformen, die im Folgenden beschrieben werden, sind sie vorteilhaft.
▪ So werden in einer bevorzugten Ausführungsform der Grunddispersion mindestens eine oder mehrere nährstoffhaltige Komponente(n) als weitere Komponenten zugegeben. Nährstoffhaltige Komponenten sind Stoffe, die das Nährstoffangebot für die angebauten Pflanzen liefern oder ergänzen, um das Wachstum und die Entwicklung der Pflanzen zu steuern beziehungsweise zu unterstützen. Die nährstoffhaltigen Komponenten beinhalten beispielsweise Stickstoff (N), Phosphat (P), Kalium (K), Magnesium (Mg), Schwefel (S), lebensnotwendige Spurenelemente einzeln oder in Kombination. Beispielsweise durch die Möglichkeit zur Zugabe von nährstoffhaltigen Komponenten kann die Nährstoffzusammensetzung im Granulat genau an die boden- und pflanzenspezifischen Bedürfnisse angepasst werden. Als Beispiel kann Harnstoff als Stickstoffkomponente der Grunddispersion zugegeben und so ein NP-Dünger erzeugt werden. Oder es kann Kaliumchlorid zugegebenen und so ein PK-Dünger erzeugt werden. Zudem kann dadurch auch die typische Schwankungsbreite der Zusammensetzung des anorganischen Sekundärphosphates kompensiert werden, um so eine gleichmäßige Düngerqualität sicherzustellen. Reduziert sich zum Beispiel im kontinuierlichen Produktionsprozess der Phosphatgehalt im zugeführten anorganischen Sekundärphosphat kann dies durch Zuführen einer phosphathaltigen Nährstoffkomponente wie Phosphorsäure im gleichen Betrag kompensiert werden.
▪ Überraschenderweise gelingt in einer besonders bevorzugten Ausführungsform durch die Zugabe zusätzlicher Phosphatträger, zum Beispiel Ammoniumphosphat, Kaliumphosphat, die Erzeugung eines Granulat mit einem Gesamt-P2O5-Gehalt von größer 35 % und einem neutral-ammoniumcitratlöslichen Phosphatanteil davon von größer 80 % resultiert, was in der Düngewirkung vergleichbar dem konventionell hergestelltem Mineraldünger Doppelsuperphosphat ist, hier jedoch erzeugt aus anorganischen Sekundärphosphat als Basisphosphatträger und nicht abgebauten Rohphosphat.
▪ Es können auch Entschäumungs- und Dispergiermittel als weitere Komponenten zugegebenen werden. Entschäumungsmittel werden beispielsweise dann vorteilhaft eingesetzt, wenn bei der Zusammenführung einzelner Stoffe, zum Beispiel beim Herstellen der Grunddispersion, eine starke gasbildende Reaktion einsetzt und sich ein Schaum ausbildet. Durch die Zugabe eines Entschäumers wird die Schaumbildung reduziert. Ist die Viskosität der Grund- oder Gesamtdispersion beispielsweise zu hoch um gerührt werde zu können, werden beispielsweise Dispergiermittel zugegeben, um die Viskosität zu senken.
▪ Auch können Mittel zur pH-Wert-Einstellung, so beispielsweise Laugen, Hydroxide, basische Salze, Ammoniak oder gebrannter Kalk, als weitere Komponenten zugefügt werden. Dadurch können vorteilhafterweise noch vorhandene Säurereste, zum Beispiel bei Einsatz oder Bildung von Säuren, neutralisiert und/oder der pH-Wert des erzeugten Düngemittels gezielt eingestellt werden.

In einer bevorzugten Ausführungsform der Erfindung werden Huminsäure und/oder Fulvosäure und/oder deren Salze zugegeben. Diese Salze können beispielsweies Humate und/oder Fulvate sein. Die genannten Stoffe haben vorteilhafterweise wachstumsfördernde Eigenschaften. So wird die Nährstoffaufnahmekapazität der Wurzel wesentlich erhöht und regt somit das Wachstum an. Durch ihre Zugabe werden das Pflanzenwachstum und die Zellbildung gefördert. Sie stimulieren die Zellmembranen sowie die Stoffwechselaktivitäten und erhöhen dadurch die Keimraten. Auch werden wichtige Pflanzenenzyme besonders gut angeregt. Die kräftige Wurzelausbildung unterstützt die Nährstoffaufnahmekapazität. Die so gestärkten Pflanzen sind deutlich weniger anfällig gegen Krankheiten. Durch die Zugabe dieser Stoffe kann die P-Aufnahme der Pflanzen erhöht werden, da es die P-Adsorption des Bodens blockiert und durch Komplexierung von Ca, Al, Fe das Ausfällen von P in schwerlösliche Verbindungen verhindert. Überraschenderweise wurde festgestellt, dass durch Zugabe dieser Stoffe in einem Bereich von 0,1 - 25 % (bezogen auf das fertige pedosphärenverbessernde Granulate) eine deutliche Steigerung des pflanzenverfügbaren Phosphats im Boden und damit eine erhöhte P-Aufnahme der Pflanzen resultieren. Besonders bevorzugt ist die Zugabe dieser Stoffe in einem Anteil zwischen 0,1 bis 10 % (bezogen auf das fertige pedosphärenverbessernde Granulate), da bereits in diesem Mengenbereich eine erhebliche Steigerung der Düngewirkung erreicht wird und folglich die notwendige Düngermenge entsprechend um bis zu 40 % reduziert werden kann. Ganz besonders ist die Zugabe dieser Stoffe in einem Mengenbereich von 0,1 - 5 % (bezogen auf das fertige pedosphärenverbessernde Granulate), da in diesem Bereich ein besonders günstiges wirtschaftliches Verhältnis zwischen den Kosten für diese Stoffe und den resultierenden verbesserten Eigenschaften resultiert.

In einer weiterhin bevorzugten Ausführungsform der Erfindung werden organische Säuren in fester und/oder flüssiger Form zugegeben. Organische Säuren sind beispielsweise Ascorbinsäure, Essigsäure, Ameisensäure, Gluconsäure, Äpfelsäure, Bernsteinsäure, Oxalsäure, Weinsäure und Zitronensäure. Organische Säuren spielen bei der Phosphataufnahme der Pflanzen aus dem Boden eine wesentliche Rolle. Insbesondere durch das Vorhandensein von organischen Säuren am Wurzelwerk können die Pflanzen ausreichend Phosphat aufnehmen, wobei typischerweise Mikroorganismen diese organischen Säuren im Ökosystem bilden.

Überraschenderweise wurde nun festgestellt, dass die Phosphataufnahme der Pflanzen erhöht wird, wenn im zugeführten Düngergranulat bereits anteilig eine oder mehrere organische Säuren bevorzugt in Summe in einem Bereich von 0,1 bis 30 % (bezogen auf das fertige pedosphärenverbessernde Granulate) integriert sind. Vermutet wird, dass diese mit zugeführten organischen Säuren dadurch vorzugsweise direkt eine vergleichbare Funktion im Wurzelbereich der Pflanze übernehmen, ohne dass diese organischen Säuren erst durch Mikroorganismen erzeugt werden müssen. Bevorzugt sind Zitronensäure, Oxalsäure und/oder Weinsäure einzeln oder in Kombination eingesetzt, da diese organischen Säuren verhältnismäßig kostengünstig und in ausreichenden Mengen verfügbar sind. Besonders bevorzugt ist der Einsatz von Zitronensäure, Oxalsäure und Weinsäure einzeln oder in Kombination in einem Mengenbereich 0,1 % bis 10 % (bezogen auf das fertige pedosphärenverbessernde Granulate), da die aufnahmeverbessernde Wirkung dieser Säuren im Verhältnis zu den Rohstoffkosten hier besonders günstig ist. Die aufgeführten Anteile an organischen Säuren im Düngegranulat können dabei entweder wie zusätzlich als weitere Komponente zugegeben werden und/oder bei Einsatz organischer Säuren als Reaktionsmittel nach der Reaktion, zumindest anteilig weiter in diesem Mengenbereich, vorliegen und so in das Düngergranulat überführt werden.

Durch die gezielte Einstellung der Art und der Zusammensetzung der Grund- bzw. Gesamtdispersion sowie der Art und der Intensität des Mischens kann ebenfalls Einfluss auf die ablaufende Reaktion und somit auf die Neutralammoniumcitratlöslichkeit des Phosphates, aber auch auf weitere Düngereigenschaften genommen werden. Durch intensives Mischen kann eine zusätzliche Dispergierung eventuell agglomerierter oder aggregierte Partikel erreicht werden, wobei desagglomerierte Partikel reaktiver sind. Längeres Mischen bedeutet nicht nur bessere Homogenisierung, sondern gleichfalls auch längere Reaktionszeit. Länger Reaktionszeit und/oder besser reaktive Stoffe führen zu einer höheren Reaktionsumsetzung und hier mit der Folge einer höheren Neutralammoniumcitratlöslichkeit. Insbesondere durch die chemische und mineralogische Zusammensetzung der zugeführten Komponenten in die Grund- und Gesamtdispersion werden im erzeugten Düngergranulat die Nährstoffzusammensetzung und deren Löslichkeit eingestellt.

Zudem sind dies wichtige Einflussfaktoren auf die Wirtschaftlichkeit des Verfahrens. So hat insbesondere der Anteil der flüssigen Phase, der vorzugsweise der Summe aller flüssigen Stoffe entspricht, in der Grund- bzw. Gesamtdispersion erheblichen Einfluss auf die ablaufenden Reaktionen und die Wirtschaftlichkeit. Die Grund- beziehungsweise Gesamtdispersion umfassen bevorzugt mindestens eine feste Phase und mindestens eine flüssige Phase. Die flüssige Phase kann dabei aus unterschiedlichen flüssigen Komponenten gebildet werden. So können flüssige Komponenten beispielsweise zumindest anteilig im anorganischen Sekundärphosphat und/oder Struvit oder zumindest anteilig im kohlenstoffhaltigem Strukturstoff, zum Beispiel die flüssige Phase bei der Gülle oder dem nicht oder nur teilentwässertem Klärschlamm, oder zumindest anteilig im Reaktionsmittels, beispielsweise flüssige insbesondere auch verdünnte Säuren, enthalten sein beziehungsweise zum Beispiel als Wasser zugeführt werden. Es ist im Sinne der Erfindung vorteilhaft, wenn die Feuchte dem physikalisch gebundenen Wasser entspricht, welches am Stoff oder Stoffgemisch anhaftet. Es ist darüber hinaus bevorzugt, dass der kohlenstoffhaltige Strukturstoff von der flüssigen Phase bei Gülle oder dem nicht oder nur teilentwässertem Klärschlamm gebildet wird.

In einer bevorzugten Ausführungsform der Erfindung wird die Grund- beziehungsweise Gesamtdispersion so eingestellt, dass sie einen Anteil an flüssiger Phase von kleiner 25 % aufweist. Vorteil eines solchen Anteils an flüssiger Phase ist, dass verhältnismäßig wenig flüssige Phase, beispielsweise insbesondere Wasser, zur Erzeugung des vorzugsweise trockenen Düngemittelgranulats verdampft werden muss. Dies spart erhebliche Energiekosten. Zudem können verhältnismäßig kostengünstige Granulierverfahren beziehungsweise -technologien, wie beispielsweise Wälzmischer, Schermischer, Pflugscharmischer, Planeten-Mischkneter, oder Intensivmischer oder Extrusionsverfahren verwendet werden.

In einer weiteren bevorzugten Ausführungsform der Erfindung wird die Grund- beziehungsweise Gesamtdispersion so eingestellt, dass sie als erdfeucht bezeichnet werden kann. Der Begriff "erdfeucht" definiert hier eine Konsistenz. In der Betontechnologie wird allgemein ein Beton steifer Konsistenz mit einem Wasserzementwert ≤ 0,40 als erdfeuchter Beton bezeichnet. In Analogie zu dieser Definition ist unter einer erdfeuchten Grund- bzw. Gesamtdispersion hier ein Konsistenzbereich vergleichbar mit einer Konsistenz wie erdfeuchter Beton zu verstehen. Auf der einen Seite ist dieser bevorzugte Konsistenzbereich in dieser Ausführungsform durch eine verhältnismäßig trockene Mischung jedoch mit mehr als 5 % Feuchte (bezogen auf das Gesamtgemisch) begrenzt, die sich gerade nicht in der Hand formen lässt, also noch nicht wie Pulver zerfällt. Auf der anderen Seite ist der Bereich begrenzt dadurch, dass sich die Grund- bzw. Gesamtdispersion in der Hand ballen und formen lässt, vergleichbar einem Schneeball, und nicht ohne Krafteinwirkung, wie beispielsweise Vibration, zerfließt. In dieser bevorzugten Ausführungsform beträgt die Feuchte der Grund- beziehungsweise Gesamtdispersion 5 % bis 40 %. Mit anderen Worten liegt ein Feuchtegehalt der Grund- beziehungsweise Gesamtdispersion in einem Bereich zwischen 5 und 40 %. Da die flüssige Phase auch gelöst vorliegende Komponenten beinhalten kann, die bei der Trocknung als Feststoff verbleiben, liegt der Prozentgehalt der flüssigen Phase in dieser bevorzugten erdfeuchten Grundbeziehungsweise Gesamtdispersion im Bereich 10 bis weniger 70 %. Mit anderen Worten weist die Grund- beziehungsweise Gesamtdispersion einen Anteil flüssiger Phase in einem Bereich zwischen 10 und 70 % auf. In einer besonders bevorzugten Ausführungsform beträgt die Feuchte 10 % bis 30 %. Vorteil dieser Ausführungsform ist, dass eine erdfeuchte Grund- beziehungsweise Gesamtdispersion mit diesem Feuchtegehalt typischerweise direkt mittels Granulierteller granulierbar ist.

Die Feuchte beziehungsweise der Feuchtegehalt wird definitionsgemäß gravimetrischen nach DIN 52183 bestimmt. Bei der auch als Darr-Methode bekannten gravimetrischen Feuchtigkeitsbestimmung wird die Probe zuerst gewogen und anschließend bei 105°C in einem Trockenofen bis zur Gewichtskonstanz getrocknet. Dabei entweicht das in der Probe enthaltene freie Wasser. Die Gewichtsdifferenz wird festgestellt, welche hier definitionsgemäß der Feuchte bzw. dem Feuchtegehalt entspricht. Da die flüssige Phase auch gelöst vorliegende Komponenten beinhalten kann, die bei der Trocknung als Feststoff verbleiben, ist in der Regel der prozentuale Anteil der flüssigen Phase zum Teil deutlich höher als die Feuchte.

In einer anderen bevorzugten Ausführungsform der Erfindung wird der Grund- beziehungsweise Gesamtdispersion ein so hoher Anteil an flüssigen Komponenten, wie zum Beispiel Wasser, Säure und/oder Lauge, zugegeben, dass von einer Suspension gesprochen werden kann. Der Begriff "Suspension" wird dabei bevorzugt als ein Gemisch aus mindestens einer festen und mindestens einer flüssigen Phase verstanden, wobei das gesamte System rühr- und pumpfähig ist. Bei einer Suspension handelt es sich definitionsgemäß um ein heterogenes Stoffgemisch aus einer Flüssigkeit und darin fein verteilten Festkörpern (Partikeln), wobei sich die Partikel in der Flüssigkeit zumindest teilweise und zumindest zeitweise in der Schwebe halten, auch wenn ein Absetzverhalten einsetzen kann. Die Feststoffe sind in der flüssigen Phase "suspendiert". Der Anteil der flüssigen Phase oder Phasen liegt im Sinne der Erfindung bei in Summe bevorzugt größer 50 %. Mit anderen Worten beträgt ein Anteil der flüssigen Phase oder Phasen mehr als 50 %. In einer solchen Suspension können die Reaktionen insbesondere zwischen Reaktionsmittel und anorganischem Sekundärphosphat typischerweise deutlich schneller ablaufen. Damit kann eine gewünschte Löslichkeit der Phosphate schneller erreicht oder verbessert werden. Dies ist von technologischem Vorteil, da sich Misch- und/oder Reaktionszeiten verkürzen können. Zudem ist die Produktqualität durch eine bessere Homogenität und gegebenenfalls höheren Löslichkeit besser. Besonders bevorzugt wird ein Anteil der flüssigen Phase oder Phasen von größer als 70 %, da dadurch die Viskosität in der Suspension durch den höheren flüssigen Phasenanteil niedriger ist. Eine niedrigere Viskosität vereinfacht das Rühren und Pumpen der Suspension.

In einer bevorzugten Ausführungsform der Erfindung enthält die Grund- beziehungsweise Gesamtdispersion eine, vorzugsweise ungelöste, feste Phase von weniger als 50 %. In einer besonders bevorzugten Ausführungsform enthält die Grund- beziehungsweise Gesamtdispersion einen Feststoffanteil von weniger als 60 %. Bei solch Verhältnissen ist die Lösegeschwindigkeit verhältnismäßig hoch, wodurch die notwendige Reaktionszeit verkürzt werden kann. Es ist im Sinne der Erfindung bevorzugt, dass die Gesamtdispersion vor der Granulation so eingestellt wird, dass der Feststoffanteil weniger als 60 % beträgt. Mit anderen Worten ist es im Sinne der Erfindung bevorzugt, dass bei dem vorgeschlagenen Verfahren der Feststoffanteil innerhalb der Gesamtdispersion weniger als 60 % beträgt. In diesem Bereich ist eine besonders gute und einfache Homogenisierung der erzeugten Rohstoffdispersion möglich. Der Begriff "Feststoffgehalt" beziehungsweise der Begriff "Feststoffanteil" stellt im Sinne der Erfindung den prozentualen Anteil an Düngemittel dar, der sich aus der Grund- oder Gesamtdispersion bildet. Die Begriffe werden im Sinne der Erfindung synonym verwendet und umfassen den unlöslichen Anteil und/oder die gelösten Nährstoffe, die in das Düngemittelgranulat überführt werden.

In einer bevorzugten Ausführungsform der Erfindung werden die eingesetzten Stoffe einzeln, in Kombination oder die gesamte Grund- bzw. Enddispersion gemahlen. Dies ist beispielsweise dann vorteilhaft, wenn die vorliegende Partikel- oder Aggregatgröße einzelner oder mehrerer Einsatzstoffe nicht ausreichend fein genug ist, um beispielsweise eine ausreichende Homogenität zu erreichen oder es dadurch zu prozesstechnischen Schwierigkeiten, beispielsweise Verstopfung von Düsen, kommt. Der besondere Vorteil dieser Ausführungsform ist, dass durch die Vermahlung die Homogenität der Grund- bzw. Gesamtdispersion und der Prozessablauf verbessert, so beispielsweise die Verstopfung von Düsen verhindert werden kann. Auch kann die Löslichkeit von Stoffen oder beinhaltetet Verbindungen durch eine kleiner Partikelgröße verbessert werden, so beispielsweise die Löslichkeit phosphathaltiger Aschen oder Schlacken. Vorteil dabei ist, dass sich die Reaktionszeit verkürzt und/oder eine höhere Ammoniumcitratlöslichkeit einstellt. Auch kann eine Vermahlung der Grund- bzw. Gesamtdispersion erforderlich sein, wenn sich durch Reaktion innerhalb der Grund- bzw. Gesamtdispersion Agglomerate, Aggregate oder Fällungsprodukte bilden, die den weiteren Prozessablauf, zum Beispiel das Fördern oder Pumpen oder Verdüsen stört. Vorteil dieser Ausführungsform ist, dass durch die Vermahlung solche Agglomerate, Aggregate oder Fällungsprodukte zerkleinert werden. Je nach Art des zu vermahlenden Stoffes und der gewünschter Korngröße und Korngrößenverteilung können unterschiedliche Trocken- oder Nassmahl-Technologien mit oder ohne Mahlhilfen dazu eingesetzt werden. Die zur Trocken- oder Nassmahlung verwendete Aggregate können beispielsweise Kugelmühlen, Stiftmühlen, Strahlmühle oder Perlmühlen, Rührwerkskugelmühlen, Hochleistungsdispergierer oder Hochdruckhomogenisatoren sein.

Sollen kohlenstoffhaltige Reststoffe, so beispielsweise insbesondere Klärschlamm, in der Landwirtschaft verwertet werden, so besteht grundsätzlich Kontaminationsgefahr und die Gefahr der Verbreitung von Krankheitserreger und damit die Möglichkeit, dass Krankheitserreger über Nahrung und Futtermittel zu Mensch und Tier gelangen und diese damit gefährden. Deshalb wird bei Einsatz von einem oder mehreren Reststoffen als kohlenstoffhaltigen Strukturstoff in einer bevorzugten Ausführungsform einen Hygienisierungsschritt integriert. Vorteil dieser Ausführungsform ist, dass durch die Integration eines Hygienisierungsschrittes eine Unterbrechung von Infektionskreisläufen durch die Abtötung von Krankheitserregern, Bakterien etc. erreicht wird. Zur Hygienisierung stehen dem Fachmann bekannte Verfahren wie beispielsweise das Zumischen von chemischen oder bakterientötenden Agenzien, eine Hygienisierung durch extreme pH-Wert-Verschiebung, beispielsweise durch Zugabe von gebranntem Kalk oder Kalkhydrat, oder eine thermische Behandlung zur Verfügung. Ein solcher Verfahrensschritt zur Hygienisierung des oder der kritischen Reststoffe kann an geeigneter Stelle durchgeführt werden. So kann eine solche Hygienisierung dieser Reststoffe vor der Zugabe des Reststoffs als kohlenstoffhaltigen Strukturstoff zur Grunddispersion erfolgen. So wird beispielsweise ein Reststoff wie beispielsweise Klärschlamm mit gebranntem Kalk zunächst separat gemischt und das Gemisch nach ausreichend langer Einwirkzeit der Grunddispersion zugegebenen werden.

In einer besonders bevorzugten Ausführungsform der Erfindung erfolgt die Hygienisierung nach Zugabe des kritischen Reststoffs als kohlenstoffhaltigen Strukturstoffs zu der Grunddispersion durch eine thermische Behandlung von mindestens 10 Minuten und oberhalb 60 °C. Überraschenderweise wurde festgestellt, dass bereits durch diese Temperatureinwirkung die Pathogene weitgehend abgetötet werden. Die thermische Behandlung der kritischen Reststoffe erfolgt in dieser Ausführungsform beispielsweise in der Grund- bzw. Gesamtdispersion, zum Beispiel indem die Grund- bzw. Gesamtdispersion aufgeheizt wird oder sich durch exotherme Reaktionen selbst erwärmt. Die thermische Behandlung kann in dieser Ausführungsform alternativ auch beispielsweise bei der Granulation und/oder der anschließenden Trocknung der erzeugten Granulate erfolgen.

Erfindungsgemäß wird aus der Gesamtdispersion bestehend aus mindestens einem kohlenstoffhaltigem Strukturstoff und mindestens einem anorganischen Sekundärphosphat gegebenenfalls in Kombination mit einem Reaktionsmittel und/oder Wasser und/oder weiteren Komponenten ein Granulat erzeugt. Die Mischung der Komponenten kann in einem dem Fachmann bekannten Mischgerät erfolgen. Das Mischgerät kann beispielsweise ein Wälzmischer, der vorzugsweise auch als Fall-, Trommel- oder Rotationsmischer bezeichnet wird, Schermischer, Zwangsmischer, Pflugscharmischer, Planeten-Mischkneter, Z-Kneter, Sigma-Kneter, Fluidmischer oder Intensivmischer geeignet. Die Auswahl des geeigneten Mischers hängt unter anderem von der Rieselfähigkeit und Kohäsionskräfte des Mischgutes ab. Die Granulierung kann in einem dem Fachmann bekannten Maschinen und Apparaturen durchgeführt werden. Vereinfacht umfasst die Granulierung im Sinne der Erfindung auch die Extrudierung. Die erfindungsgemäße Granulation kann dabei während des Mischens und/oder daran anschließend erfolgen, entweder im gleichen Mischgerät oder in einer separaten Granuliereinheit, beispielsweise Pelletier- oder Granuliertellern, Granuliertrommel, Wirbelschichtgranulierer, Sprühgranulierer oder Extruder.

In einer bevorzugten Ausführungsform der Erfindung werden alle erforderlichen Stoffe zur Bildung der Grund- bzw. der Gesamtdispersion in einem Mischgerät zusammengeführt, intensiv gemischt und dabei oder im Anschluss im gleichen Apparat granuliert. Die bei Verwendung von anorganischem Sekundärphosphat erfindungsgemäße Reaktion zwischen dem Reaktionsmittel und zumindest einem Teil des zugeführten Phosphates des anorganischen Sekundärphosphats erfolgt beim Mischen und/oder Granulieren und gegebenenfalls darüber hinaus, beispielsweise fortlaufend bis zum erfolgten Trocknen der erzeugten Granulate. Zwischen dem Mischen und Granulieren oder nach dem Granulieren kann gegebenenfalls auch eine Reifezeit integriert werden. Dabei wird abgewartet bis die Reaktion zwischen anorganischem Sekundärphosphat und Reaktionsmittel im ausreichenden Umfang ausreichend erfolgt ist, zum Beispiel bevor final getrocknet wird. Die erforderliche Klebeneigung der Mischung kann dabei beispielsweise über die Art und Menge an flüssigem Anteil der zugeführten Komponenten, beispielsweise der flüssigen Komponenten oder der Feuchte etc., und/oder durch Zugabe von zusätzlichen Flüssigkeiten, wie beispielsweise Wasser, eingestellt werden. Die Klebeneigung kann, gegebenenfalls zusätzlich, auch durch unterschiedliche Stoffe, wie beispielsweise Bindemittel eingestellt werden. Überaschenderweise wurde festgestellt, dass es mit dieser bevorzugten Ausführungsform gelingt, die Mischung, die notwendigen Reaktionen und die Granulation in einem Apparat zu realisieren, wobei eine gute Rundheit in dem bevorzugten Granulatgrößenbereich erzielt wird und zudem die Granuliertechnologie und die Prozesskosten günstig sind. So werden beispielsweise als Ausführungsbeispiel in dieser bevorzugten Ausführungsform alle Komponenten in ein Intensivmischer, zum Beispiel in einen Intensivmischer Typ R Fa. Eirich, gegeben, der Flüssigphasenanteil so eingestellt und gegebenenfalls Bindemittel so zugegeben, dass durch die intensive mechanische Mischung ein Grüngranulat mit gewünschter Korngröße, bevorzugt im Bereich 1 bis 10 mm, besonders bevorzugt 2 bis 5 mm resultiert. Es ist im Sinne der Erfindung bevorzugt, dass Grüngranulat mindestens die Komponenten des Düngegranulats enthält, jedoch einen zu hohen Flüssigphasenanteil, z.B. Feuchte, aufweist, der noch durch Trocknung entfernt werden muss.

In einer ebenfalls bevorzugten Ausführungsform der Erfindung erfolgt die Granulation auf einem Pelletier- bzw. Granulierteller. Dazu werden die Stoffe zur Bildung der Grund- und Gesamtdispersion dem Pelletier- bzw. Granulierteller zugeführt. Bevorzugt wird zumindest ein Teil der festen Komponenten zuvor separat vorgemischt. Zusätzlich wird eine flüssige Komponente, gegebenenfalls in Kombination mit einem darin befindlichen oder separat zugeführten Bindemittel, auf die Komponenten auf dem Granulierteller aufgesprüht. Im bevorzugten Fall ist die flüssige Komponente Wasser. Durch die Zugabe der flüssigen Komponente und der Drehbewegung formen sich die Grüngranulate, die bei und/oder nach der Granulation zur Ausbildung der Granulate getrocknet werden können. Vorteil dieser Ausführungsform ist, dass die Granulation und die notwendige Technologie besonders kostengünstig sind. Überraschenderweise wurde auch festgestellt, dass diese einfache Granulationstechnologie in Kombination mit dieser Ausführungsform wenig reparaturanfällig ist.

In einer weiteren bevorzugten Ausführungsform der Erfindung erfolgt die Granulierung in einem Wirbelschicht- oder Strahlschichtreaktor, besonders bevorzugt durch Sprühgranulation oder Sprühagglomeration. Solche Apparate sind dem Fachmann bekannt und werden beispielsweise durch Fa. Glatt mit der AGT- oder GF-Serie angeboten. Dazu wird eine Gesamtdispersion aus Grunddispersion einschließlich aller gegebenenfalls zusätzlichen Komponenten - beispielsweise nährstoffhaltige Komponenten, Dispergier- und Entschäumungsmittel, Mittel zur pH-Werteinstellung, Wasser - zunächst so hergestellt, dass die bei Verwendung von anorganischem Sekundärphosphat erfindungsgemäße Reaktion zwischen zumindest Teilen des Phosphates aus dem anorganischem Sekundärphosphat und dem Reaktionsmittel vor der Granulation ausreichend erfolgt ist und diese Gesamtdispersion einem Wirbelschichtreaktor zugeführt werden kann. In einer besonders bevorzugten Ausführungsform erfolgt die Zuführung durch einsprühen, beispielsweise durch Einsprühen über Düsen. Dazu muss die Gesamtdispersion pump- und sprühfähig sein. Dies kann vorteilhafterweise dadurch erreicht werden, dass beispielsweise der Anteil an flüssiger Phase ausreichend hoch ist, also beispielsweise entsprechend notwendige Mengen an Wasser zugeführt werden. Hohe Mengen an flüssiger Phase begünstigen zwar wegen ihrer geringeren Neigung zur Ausfällung, Kristallisation, Gelbildung usw. die Stabilität und die Pumpfähigkeit der Grunddispersion und vereinfachen damit den technischen Betrieb. Da die zu erzeugenden Granulate jedoch einen geringen Anteil an Flüssigphase aufweisen sollen, insbesondere eine Feuchte bevorzugt kleiner als 5 %, besonders bevorzugt kleiner als 2 %, muss die flüssige Phase beispielsweise bei der Granulation in dieser Ausführungsform energetisch aufwendig entfernt werden. Besonders bevorzugt ist deshalb die Einstellung der flüssigen Phase in der Gesamtdispersion in der Höhe, dass sich aus der Grunddispersion 40 - 70 % Granulat, ganz besonders bevorzugt 45 - 60 % bilden. Bei diesem Anteil von flüssiger Phase ist eine Gesamtdispersion erfahrungsgemäß ausreichend stabil und pumpfähig einzustellen, der energetische Aufwand zur Abtrennung der flüssigen Phase noch akzeptabel. Die Herstellung der Gesamtdispersion kann in einem Rührbehälter oder Mischer erfolgen. Vorteil dieser bevorzugten Ausführungsform zur Granulation ist, dass die Granulatgröße besonders gut einstellbar ist, die Granulate sehr homogen sind sowie eine besonders runde und kompakte Granulatform resultiert. Diese Granulate lassen sich gut handeln und besonders einfach auf Felder zum Beispiel mit Streuvorrichtungen ausbringen. Durch die Kompaktheit entsteht wenig Staub und Abrieb, was ebenfalls für das Ausbringen durch zum Beispiel Streuvorrichtungen vorteilhaft ist.

Typischerweise besteht die Anforderung, dass Granulate eine geringe Feuchtigkeit, d.h. physikalisch gebundenes Wasser, aufweisen. Eine typische Anforderung ist insbesondere, dass eine Feuchte kleiner als 5 %, bevorzugt kleiner als 2 % vorliegt, d.h. dass das Granulat eine entsprechende Feuchte aufweist. Je nach Art der Granulation kann diese Anforderung für die Feuchtigkeit bereits bei der Granulation erzielt werden. So zum Beispiel in vorteilhafter Weise bei der Sprühagglomeration bzw. -granulation erfolgen, wo die Granulation und Trocknung weitgehend gleichzeitig ablaufen. Es kann im Sinne der Erfindung bevorzugt sein, dass die erzeugten Granulate nach der Granulation noch getrocknet oder zumindest zusätzlich nachgetrocknet werden. Dafür stehen unterschiedliche geeignete Trocknungstechnologien zur Verfügung, so beispielsweise Kontakttrockner, konvektive Trockner oder Strahlungstrockner. Beim Kontakttrocknen wird die zur Trocknung notwendige thermische Energie insbesondere durch den Kontakt mit Heizflächen zugeführt. Bei der konvektiven Trocknung wird die zur Trocknung notwendige thermische Energie insbesondere durch den Kontakt mit Heißgas zugeführt. Beim Strahlungstrocknen wird die zur Trocknung notwendige thermische Energie insbesondere durch Strahlung definierter Frequenz zugeführt.

Durch die Trocknung wird die vorhandene flüssige Phase, zum Beispiel das Wasser, im erforderlichen Maße abgetrennt. Gegebenenfalls erfolgt durch die Trocknung auch ein Festigkeitsanstieg der Granulate, zum Beispiel indem sich bindende Phasen durch die Trocknung bilden oder beispielsweise indem ein Bindemittel dadurch seine Bindewirkung ausbildet.

In einer vorteilhaften Ausführungsform der Erfindung erfolgt die Trocknung durch Eigenwärme der erzeugten Granulate oder wird dadurch zumindest unterstützt. Die Eigenwärme erhalten die Granulate durch Erwärmen. Beispielsweise kann eine Erwärmung der Granulate prozessbedingt durch den Granulationsprozess, zum Beispiel durch Eintrag mechanischer Energie, die in Wärmeenergie umgewandelt wird, oder durch chemische Reaktion erfolgen. So liefern beispielsweise die Reaktion zwischen CaO und Säure und/oder Wasser oder die Reaktion zwischen Schwefelsäure und Wasser - beispielsweise beim Verdünnen - exotherme Energie, die zum Erwärmen der Grund- bzw. Gesamtdispersion und/oder der geformten Granulate genutzt werden kann. Vorteil dieser Ausführungsform ist, dass keine Trocknungsenergie von außen zusätzlich zugeführt werden muss.

Werden Kristallisationsprodukte aus der Phosphorelimination, wie Struvit, Brushit und/oder hydroxyxlapatitähnliche Ca-P-Phase, der Grund- bzw. Gesamtdispersion zugeführt und sind folglich im erzeugten Granulat bzw. Grüngranulat enthalten, ist es im Sinne der Erfindung bevorzugt, dass die Trocknung in einer bevorzugten Ausführungsform der Erfindung oberhalb von 100°C bezogen auf die Materialtemperatur bei der Trocknung erfolgt. Diese Kristallisationsprodukte enthalten vorzugsweise einen großen Anteil chemisch gebundenen Wassers, wobei es sich dabei vorzugsweise nicht um "Feuchte" im Sinne der Erfindung handelt, sondern um Wasser, das in der Kristallstruktur eingebunden vorliegt. Im Bereich oberhalb von 100 °C wird dieses chemisch gebundene Wasser vorzugsweise abgespaltet. Durch das Abtrennen des Wassers aus dem Granulat erhöht sich vorteilhafterweise der prozentuale Anteil der verbleibenden Komponenten. So kann beispielsweise die Konzentration an Nährstoffen im Granulat erhöht werden, die zuvor durch das chemisch gebundene Wasser quasi entsprechend verdünnt vorlag. In einer besonders bevorzugten Ausführungsform der Erfindung erfolgt die Trocknung, wenn Kristallisationsprodukte aus der Phosphorelimination enthalten sind in einem Bereich 100-140°C bezogen auf die Materialtemperatur bei der Trocknung. Es ist im Sinne der Erfindung somit ganz besonders bevorzugt, dass die Trocknung in einem Temperaturbereich zwischen 100 und 140 °C erfolgt. Oberhalb von 140°C besteht die Gefahr, dass zunehmend Stickstoff abgespalten wird. Damit ist ein unerwünschter Stickstoffverlust aus dem Granulat verbunden. Darüber hinaus muss die Abluft entsprechend aufwendiger gereinigt werden. Durch die Begrenzung auf eine Temperatur von max. 140 °C in dieser bevorzugten Ausführungsform der Erfindung können diese Nachteile weitgehend vermieden werden. In einer ganz besonderen Ausführungsform der Erfindung erfolgt die Trocknung in einem Temperaturbereich zwischen 120°C und 140°C.

An die Herstellung von Granulaten werden verschiedene Anforderungen gestellt. Zum einen soll das Granulat möglichst formgenau herstellbar sein. Eine möglichst gleiche Größe stellt definierte, gleichmäßige Zerfallseigenschaften sicher, was für eine gezielte Nährstoffzuführung notwendig ist. Deshalb wird die Granulatgröße im vorgeschlagenen Verfahren vorzugsweise in einem Bereich von 0,5- 10 mm eingestellt. Dieser Korngrößenbereich ist für Düngemittel eine typischerweise gehandelte Spezifikation. Bevorzugt wird die Granulatgröße in einem Bereich von 2-5 mm. Festgestellt wurde, dass sich Granulate in diesem Bereich besonders für das maschinelle Ausbringen in der Landwirtschaft mittels Streuwagen eignen. Die Einstellung der Granulatgröße kann beispielsweise durch Separation von Kornfraktionen erfolgen. Überkorn und Unterkorn wird dabei von dem Gutkorn, d.h. Granulat im gewünschten Größenbereich, getrennt und gegebenenfalls dem Produktionsprozess, insbesondere dem Misch- und/oder Granulierprozess, gegebenenfalls mit vorheriger Aufbereitung und/oder Aufmahlung, zurückgeführt.

Weiterhin wird eine gute Bindung innerhalb des Granulats verlangt, um auch nach längerer Lagerung Staubverluste beim Ausbringen des Düngemittels zu vermeiden. Die Festigkeit der Granulate kann beispielsweise über die Prozessführung eingestellt werden. So hat beispielsweise die Trocknungsgeschwindigkeit Einfluss auf die Porosität und Kompaktheit und damit auf die Festigkeit der Granulate und kann darüber beeinflusst werden. Die Festigkeit kann auch beispielsweise über die Art und Feinheit der Rohstoffkomponenten beeinflusst oder durch die Zugabe von Bindemittel erhöht werden.

Die erfindungsgemäß erzeugten Düngegranulate können eine oder mehrere Beschichtungen zur Funktionalisierung, z.B. Reduzierung der Verklumpungsneigung, Erhöhung der Festigkeit, zum Schutz, z.B. vor Feuchtigkeit, und/oder zur gesteuerten Nährstofffreistellung, d.h. Beeinflussung der Löslichkeit durch das Coating, erhalten. Zur Beschichtung sind dem Fachmann zahlreiche Verfahren und Technologien bekannt, wobei hier alle Verfahren und Technologien geeignet sind, die eine gewünschte Beschichtung erzeugen.

Die Erfindung wird anhand der nachfolgenden Ausführungsbeispiele näher beschrieben. Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

### Ausführungsbeispiel 1:

In einem Mischbehälter werden 170 kg Wasser und 30 kg Salpetersäure (65 %) als Reaktionsmittel vorgelegt und vermischt, dazu werden 100 kg Klärschlammasche als anorganisches Sekundärphosphat (P2O5-Gehalt 21,0 %; davon neutral-ammoniumcitratlöslich 38 % und <1 % wasserlöslich) zugegeben und die so erzeugte Grunddispersion gemischt. In diesem Ausführungsbeispiel ist die Grunddispersion eine Suspension. Nachdem die Komponenten zusammengeführt wurden, wird eine Inkubationszeit von 25 Minuten eingehalten, wobei in dieser Zeit weiter gerührt wird. Während dieser Inkubationszeit reagiert das unlösliche Phosphat aus der Klärschlammasche zumindest teilweise mit der Salpetersäure. Durch die einsetzende Reaktion zwischen Reaktionsmittel und Sekundärphosphat erwärmt sich die Rohstoffdispersion auf ca. 40 °C.

Nach der Inkubationszeit werden der Grunddispersion 30 kg Klärschlamm (Trockensubstanz 35 % mit 82 % Organik und 38 % Kohlenstoff in der Trockensubstanz) als kohlenstoffhaltigen Strukturstoff und 125 kg Monoammoniumphosphat (59 % P2O5, 11,5 % N) unter Rühren zugegeben. Die weitere Komponente Monoammoniumphosphat dient hier als Nährstoffkomponente, durch die eine definierte Nährstoffzusammensetzung im erzeugten Düngemittel erreicht wird. Diese Gesamtdispersion in Form einer Suspension wird zunächst gesiebt und anschließend einer kontinuierlichen Wirbelschichtanlage zur Sprühgranulation zugeführt. Das Sieben soll dabei verhindern, dass die Düsen verstopfen. Die eingestellte Schichttemperatur (Materialtemperatur) bei der Sprühgranulation beträgt 78 °C und die Verweilzeit in der Wirbelschicht ist länger als 10 Minuten, dadurch wird der zugeführte Anteil an Klärschlamm bei der Sprühgranulation ausreichend hygienisiert. Die Sprühgranulation wird weiterhin so gesteuert, dass eine mittlere Granulatgröße von 3,5 mm resultiert. Nach der Sprühgranulation werden Granulate kleiner 2 mm und Granulate größer 5 mm durch Siebung abgetrennt und dem Sprühgranulationsprozess als Kernmaterial zugeführt, wobei die Granulate größer 5 mm zuvor aufgemahlen werden. Zur Sprühgranulation ist ein Kernmaterial in Form eines Wirbelbettes erforderlich, auf welches die Rohstoffdispersion aufgesprüht wird. In der Startphase wird dazu vorzugsweise arteigenes Kernmaterial vorgelegt, im kontinuierlichen Prozess resultiert das Kernmaterial aus der Rückführung der abgetrennten Granulatfraktionen.

In dem entleerten Mischbehälter kann eine neue Mischung analog der obigen Beschreibung für einen fortlaufenden Prozess beginnen. Für einen kontinuierlich fortlaufenden Prozess werden entsprechend Pufferbehälter bei den Prozessschritten der Granulation installiert, um die zeitliche Abfolge der parallel ablaufenden kontinuierlichen Granulation und diskontinuierlichen Suspensionserzeugung sicherzustellen.

Das erzeugte Granulat weist eine runde und kompakte Granulatform im Bereich 2-5 mm auf, einen P2O5-Gesamtgehalt von 38 %, wobei davon 89 % ammoniumcitratlöslich und 55% wasserlöslich sind. Im erzeugten Granulat sind ca. 1,6 % Kohlenstoff aus dem zugeführten Klärschlamm enthalten. Dieser Anteil führt zu einer geeigneten Strukturierung der Granulate, damit diese Granulate in der Anwendung ein besonders gutes Löseverhalten aufweisen. Bei allen relevanten Schadstoffen lag die ermittelte Konzentration unterhalb der Grenzwerte der Düngemittelverordnung. Dieses erzeugte Granulat stellt einen boden- und pflanzenspezifischen Phosphatdünger dar, wobei in diesem Ausführungsbeispiel die Düngewirkung mit dem sehr hohen Phosphatgehalt im Vordergrund für die Anwendung steht.

### Ausführungsbeispiel 2:

Analog Ausführungsbeispiel 1 wird eine Grunddispersion in Form einer Suspension erzeugt, gemischt und erneut eine Inkubationszeit von 25 Minuten eingehalten. Nach der Inkubationszeit werden der Grunddispersion 350 kg Klärschlamm (Trockensubstanz 35 % mit 82 % Organik und 38 % Kohlenstoff in der Trockensubstanz) als kohlenstoffhaltigen Strukturstoff und 55 kg Monoammoniumphosphat (59 % P2O5, 11,5 % N) unter Rühren zugegeben. Die weitere Komponente Monoammoniumphosphat dient hier als Nährstoffkomponente, durch die eine definierte Nährstoffzusammensetzung im erzeugten Düngemittel erreicht wird. Diese Gesamtdispersion, ebenfalls wie im Ausführungsbeispiel 1, in Form einer Suspension, wird zunächst gesiebt und anschließend einer kontinuierlichen Wirbelschichtanlage zur Sprühgranulation zugeführt. Das Sieben soll dabei verhindern, dass die Düsen verstopfen. Die eingestellte Schichttemperatur und/oder Materialtemperatur bei der Sprühgranulation beträgt 80 °C und die Verweilzeit in der Schichttemperatur mehr als 10 Minuten, dadurch wird der zugeführte Anteil an Klärschlamm bei der Sprühgranulation ausreichend hygienisiert. Die Sprühgranulation wird weiterhin so gesteuert, dass eine mittlere Granulatgröße von 3,5 mm resultiert. Nach der Sprühgranulation werden Granulate kleiner 2 mm und Granulate größer 5 mm durch Siebung abgetrennt und dem Sprühgranulationsprozess als Kernmaterial zugeführt, wobei die Granulate größer 5 mm zuvor aufgemahlen werden. Zur Sprühgranulation ist ein Kernmaterial in Form eines Wirbelbettes erforderlich, auf welches die Rohstoffdispersion aufgesprüht wird. In der Startphase wird dazu vorzugsweise arteigenes Kernmaterial vorgelegt, im kontinuierlichen Prozess resultiert das Kernmaterial aus der Rückführung der abgetrennten Granulatfraktionen. Der kontinuierliche Betrieb wird wie in Ausführungsbeispiel 1 beschrieben sichergestellt.

Das erzeugte Granulat weist eine runde und kompakte Granulatform im Bereich 2-5 mm auf, einen P2O5-Gesamtgehalt von 18 %, wobei davon 85 % ammoniumcitratlöslich und 52% wasserlöslich sind. Das erzeugte Granulat weist einen Kohlenstoffanteil von ca. 15 % aus dem zugeführten Klärschlamm auf. Bei allen relevanten Schadstoffen lag die ermittelte Konzentration unterhalb der Grenzwerte der Düngemittelverordnung. Das erzeugte Granulat entspricht vom Nährstoffgehalt einem Superphosphat und hat durch den hier eingesetzten kohlenstoffhaltigen Strukturstoff Klärschlamm zusätzlich eine bodenverbessernde Wirkung.

### Ausführungsbeispiel 3:

In einem Mischbehälter eines Intensivmischers (Fa. Eirich R16W) werden 40 kg Wasser und 30 kg Salpetersäure (65 %) als Reaktionsmittel vorgelegt und vermischt, dazu werden 100 kg Klärschlammasche als anorganisches Sekundärphosphat (P2O5-Gehalt 21,0 %; davon neutral-ammoniumcitratlöslich 38 % und <1 % wasserlöslich) zugegeben und die so erzeugte Grunddispersion gemischt. Nachdem die Komponenten zusammengeführt wurden, wird eine Inkubationszeit von 15 Minuten eingehalten, wobei in dieser Zeit weiter gerührt wird. Durch die einsetzende Reaktion zwischen Reaktionsmittel und Sekundärphosphat, die das unlösliche Phosphat aus der Klärschlammasche zumindest teilweise umwandelt, erwärmt sich die Rohstoffdispersion auf ca. 60 °C.

Nach der Inkubationszeit werden der Grunddispersion 350 kg Klärschlamm (Trockensubstanz 35 % mit 82 % Organik und 38 % Kohlenstoff in der Trockensubstanz) als kohlenstoffhaltigen Strukturstoff und 55 kg Monoammoniumphosphat (59 % P2O5, 11,5 % N) zugegeben und alles zusammen wird intensiv gemischt. Der Anteil an flüssiger Phase ist in dieser Gesamtdispersion deutlich niedriger als bei Ausführungsbeispiel 2 und kann als erdfeucht bezeichnet werden. Der Anteil der flüssigen Phase ist dabei so eingestellt, dass sich aus der erdfeuchten Gesamtdispersion die Grüngranulate bilden. Bei Bedarf kann durch Zugabe von geringen Mengen Wasser die Klebeneigung der Gesamtdispersion noch etwas erhöht werden. Die gebildeten Grüngranulate werden anschließend bei 110 °C für länger als 10 Minuten getrocknet und in 2-5 mm fraktioniert werden. Die Fraktion kleiner 2 mm und die Fraktion größer 5 mm werden nach vorheriger Aufmahlung der nächsten Granulation zurückgeführt. Durch die aufgeführte Trocknung wird der zugeführte Anteil an Klärschlamm ausreichend hygienisiert.

Das erzeugte Granulat weist eine runde Granulatform im Bereich 2-5 mm auf, einen P2O5-Gesamtgehalt von 18 %, wobei davon 79 % ammoniumcitratlöslich und 50% wasserlöslich sind. Das erzeugte Granulat weist einen Kohlenstoffanteil von ca. 15 % aus dem zugeführten Klärschlamm auf. Das erzeugte Granulat entspricht vom Nährstoffgehalt einem Superphosphat und hat durch den hier eingesetzten kohlenstoffhaltigen Strukturstoff Klärschlamm zusätzlich eine bodenverbessernde Wirkung. Das erzeugte Granulat ist damit in seiner stofflichen Zusammensetzung identisch dem erzeugten Granulat in Ausführungsbeispiel 2. Durch den geringeren Anteil an flüssiger Phase muss bei diesem Ausführungsbeispiel jedoch deutlich weniger Wasser verdampft werden, was erheblich Energie spart.

### Ausführungsbeispiel 4:

In einem Mischbehälter eines Intensivmischers (Fa. Eirich R16W) werden 20 kg Wasser und 50 kg Schwefelsäure (80 %) als Reaktionsmittel vorgelegt und vermischt, dazu werden 100 kg Klärschlammasche als anorganisches Sekundärphosphat (P2O5-Gehalt 21,0 %; davon neutral-ammoniumcitratlöslich 38 % und <1 % wasserlöslich) zugegeben und die so erzeugte Grunddispersion gemischt. Nachdem die Komponenten zusammengeführt wurden, wird eine Inkubationszeit von 15 Minuten eingehalten, wobei in dieser Zeit weiter gerührt wird. Während dieser Inkubationszeit reagiert das unlösliche Phosphat aus der Klärschlammasche zumindest teilweise mit der Schwefelsäure. Durch die einsetzende Reaktion zwischen Reaktionsmittel und Sekundärphosphat erwärmt sich die Rohstoffdispersion auf ca. 60 °C.

Nach der Inkubationszeit werden der Grunddispersion 30 kg Klärschlamm (Trockensubstanz 35 % mit 82 % Organik und 38 % Kohlenstoff in der Trockensubstanz) als kohlenstoffhaltigen Strukturstoff und als weitere Komponenten zur Einstellung der Nährstoffzusammensetzung 50 kg Harnstoff und 92 kg Monoammoniumphosphat (59 % P2O5, 11,5 % N) zugegeben und alles zusammen wird intensiv gemischt. Der Anteil der flüssigen Phase ist dabei so eingestellt, dass sich aus der erdfeuchten Gesamtdispersion die Grüngranulate bilden. Bei Bedarf kann durch Zugabe von geringen Mengen Wasser die Klebeneigung der Gesamtdispersion noch etwas erhöht werden. Dabei bilden sich Grüngranulate die anschließend bei 110 °C für mehr als 10 Minuten getrocknet und in Korngrößen von 2-5 mm fraktioniert werden. Die Fraktion kleiner 2 mm und die Fraktion größer 5 mm werden nach vorheriger Aufmahlung kann der der nächsten Granulation zurückgeführt werden. Durch die aufgeführte Trocknung wird der zugeführte Anteil an Klärschlamm ausreichend hygienisiert.

Das erzeugte Granulat weist eine runde Granulatform im Bereich 2-5 mm auf, einen P2O5-Gesamtgehalt von 27 %, wobei davon 87 % ammoniumcitratlöslich und 55 % wasserlöslich sind, einen N-Gehalt von 12 % und einen S-Gehalt von 5 % auf. Im erzeugten Granulat sind ca. 1,3 % Kohlenstoff aus dem zugeführten Klärschlamm enthalten. Dieser Anteil an Kohlenstoff führt zu einer geeigneten Strukturierung der Granulate, damit diese Granulate in der Anwendung ein besonders gutes Löseverhalten aufweisen. Bei allen relevanten Schadstoffen lag die ermittelte Konzentration unterhalb der Grenzwerte der Düngemittelverordnung. Dieses erzeugte Granulat stellt einen boden- und pflanzenspezifischen NP-Dünger dar, wobei in diesem Ausführungsbeispiel die Düngewirkung mit dem sehr hohen Phosphatgehalt im Vordergrund für die Anwendung steht.

### Ausführungsbeispiel 5: (nicht gemäss der Erfindung)

In einem Mischbehälter eines Intensivmischers (Fa. Eirich R16W) werden 40 kg Wasser 100 kg, 60 kg Klärschlamm (Trockensubstanz 35 % mit 82 % Organik und 38 % Kohlenstoff in der Trockensubstanz) als kohlenstoffhaltigen Strukturstoff und als weitere Komponenten zur Einstellung der Nährstoffzusammensetzung 30 kg Harnstoff und 75 kg Monoammoniumphosphat (59 % P2O5, 11,5 % N) zugegeben. Vorzugsweise handelt es sich bei dem Struvit um das Produkt "Berliner Pflanze", welches zuvor auf Pulverfeinheit aufgemahlen wurde.

In diesem Ausführungsbeispiel wird kein anorganisches Sekundärphosphat, sondern Struvit verwendet. Da der Struvit bereits selbst eine hohe Ammoniumcitratlöslichkeit aufweist, ist das Zuführen eines Reaktionsmittels nicht erforderlich.

Entsprechend muss auch keine Inkubationszeit zur Reaktion des Reaktionsmittels mit dem anorganischen Sekundärphosphat eingehalten werden.

Die Gesamtdispersion wird intensiv gemischt. Der Anteil der flüssigen Phase ist dabei so eingestellt, dass sich aus der erdfeuchten Gesamtdispersion die Grüngranulate bilden. Bei Bedarf kann durch Zugabe von geringen Mengen Wasser die Klebeneigung der Gesamtdispersion noch etwas erhöht werden. Dabei bilden sich Grüngranulate die anschließend bei 120 °C für mehr als 10 Minuten getrocknet und in 2-5 mm fraktioniert werden. Die Fraktion kleiner 2 mm und die Fraktion größer 5 mm werden nach vorheriger Aufmahlung kann der nächsten Granulation zurückgeführt werden. Durch die aufgeführte Trocknung wird der zugeführte Anteil an Klärschlamm ausreichend hygienisiert und ein erheblicher Anteil an Kristallwasser aus dem Struvit ausgetrieben.

Das erzeugte Granulat weist eine runde Granulatform im Bereich 2-5 mm auf, einen P2O5-Gesamtgehalt von 46 %, wobei davon 95 % ammoniumcitratlöslich und 48 % wasserlöslich sind, einen N-Gehalt von 18 % und einen MgO-Gehalt von 11 % auf. Im erzeugten Granulat sind ca. 3,5 % Kohlenstoff aus dem zugeführten Klärschlamm enthalten. Dieser Anteil an Kohlenstoff führt zu einer geeigneten Strukturierung der Granulate, damit diese Granulate in der Anwendung ein besonders gutes Löseverhalten aufweisen. Bei allen relevanten Schadstoffen lag die ermittelte Konzentration unterhalb der Grenzwerte der Düngemittelverordnung. Dieses erzeugte Granulat stellt einen boden- und pflanzenspezifischen NP-Dünger dar, wobei in diesem Ausführungsbeispiel die Düngewirkung mit dem sehr hohen Phosphatgehalt im Vordergrund für die Anwendung steht.

## Patentansprüche

1. Pedosphärenverbesserndes Granulat mit einem Phosphatanteil, der größer als 60 % Neutral-Ammoniumcitrat löslich ist, herstellbar mit einem Verfahren umfassend die Schritte:
a) Erzeugung einer Gesamtdispersion, umfassend mindestens einen kohlenstoffhaltigen Strukturstoff mit einem Kohlenstoffanteil von größer 5%
- nämlich Torf, Humus und/oder Biokohle aus der hydrothermalen Carbonisierung (HTC) oder kohlenstoffhaltige Reststoffe ausgewählt aus Klärschlämmen, Gärresten, Gülle, Tierausscheidungen, Tier- und Fischmehlen und
b) weiterhin umfassend mindestens ein anorganisches Sekundärphosphat,
- nämlich Aschen und/oder Schlacken aus der Mono- oder Mitverbrennung von Klärschlamm, Tierausscheidungen, Tiermehl, Gülle und/oder Gärresten als Einzelstoff bzw. als Gemische daraus,
in Kombination mit mindestens einem Reaktionsmittel,
- nämlich organische oder anorganische Säuren oder Säuregemische oder Laugen oder Gemische aus unterschiedlichen Laugen,
und
c) Durchführung einer Granulierung oder Extrudierung.

2. Verfahren zur Herstellung eines pedosphärenverbessernden Granulates mit einem Phosphatanteil der größer als 60 % Neutral-Ammoniumcitrat löslich ist umfassend die Schritte:
a) Erzeugung einer Gesamtdispersion, umfassend mindestens einen kohlenstoffhaltigen Strukturstoff mit einem Kohlenstoffanteil von größer 5 %
- nämlich Torf, Humus und/oder Bio-kohle aus der hydrothermalen Carbonisierung (HTC) oder kohlenstoff-haltige Reststoffe ausgewählt aus Klärschlämmen, Gärresten, Gülle, Tierausscheidungen, Tier- und Fischmehlen und
b) weiterhin umfassend mindestens ein anorganisches Sekundärphosphat,
- nämlich Aschen und/oder Schlacken aus der Mono- oder Mitverbrennung von Klärschlamm, Tierausscheidungen, Tiermehl, Gülle und/oder Gärresten als Einzelstoff bzw. als Gemische daraus,
in Kombination mit mindestens einem Reaktionsmittel,
- nämlich organische oder anorganische Säuren oder Säuregemische oder Laugen oder Gemische aus unterschiedlichen Laugen,
und
c) Durchführung einer Granulierung oder Extrudierung.

3. Granulat nach Anspruch 1, oder Verfahren nach Anspruch 2,
**dadurch gekennzeichnet, dass**
bei der Erzeugung einer Gesamtdispersion organische Säuren zugegeben werden.

4. Granulat nach einem oder mehreren der Ansprüche 1 oder 3, oder Verfahren nach einem oder mehreren der Ansprüche 2 oder 3,
**dadurch gekennzeichnet, dass**
das Reaktionsmittel organische Säuren umfasst.

5. Granulat nach einem oder mehreren der Ansprüche 1 oder 3 bis 4, oder Verfahren nach einem oder mehreren der Ansprüche 2 bis 4,
**dadurch gekennzeichnet, dass**
mindestens das anorganische Sekundärphosphat und mindestens das Reaktionsmittel einer Grunddispersion zugeführt werden, wobei eine Inkubationszeit zwischen anorganischem Sekundärphosphat und Reaktionsmittel zwischen 10 bis 500 Minuten eingehalten wird, wodurch die Neutralammoniumcitratlöslichkeit des mit dem anorganischen Sekundärphosphat zugeführten Phosphats durch Reaktion mit dem mindestens einem Reaktionsmittel erhöht wird und der P₂O₅-Anteil aus dem anorganischen Sekundärphosphat im Düngergranulat größer 60 % neutral-ammoniumcitratlöslich ist.

6. Granulat nach einem oder mehreren der Ansprüche 1 oder 3 bis 5 oder Verfahren nach einem oder mehreren der Ansprüche 2 bis 5
**dadurch gekennzeichnet, dass**
das pedosphärenverbessernde Granulat einen Kohlenstoffanteil von 5 bis 50 % oder einen Kohlenstoffanteil von 0,1 bis weniger 5 % enthält.

7. Granulat nach einem oder mehreren der Ansprüche 1 oder 3 bis 6 oder Verfahren einem oder mehreren der Ansprüche 2 bis 6,
**dadurch gekennzeichnet,**
**dass** in der Gesamtdispersion in Summe 1 bis 70 % Kristallisationsprodukte bezogen auf das fertige pedosphärenverbessernde Granulate aus einer Phosphorelimination enthalten sind.

8. Granulat nach einem oder mehreren der Ansprüche 1 oder 3 bis 7 oder Verfahren nach einem oder mehreren der Ansprüche 2 bis 7,
**dadurch gekennzeichnet, dass**
eine Trocknung oberhalb 100°C bezogen auf die Materialtemperatur erfolgt.

9. Granulat nach einem oder mehreren der Ansprüche 1 oder 3 bis 8 oder Verfahren einem oder mehreren der Ansprüche 2 bis 8,
**dadurch gekennzeichnet, dass**
der pH-Wert der Gesamtdispersion in einem Bereich von 4 - 8 liegt.

10. Granulat nach einem oder mehreren der Ansprüche 1 oder 3 bis 9 oder Verfahren einem oder mehreren der Ansprüche 2 bis 9,
**dadurch gekennzeichnet, dass**
sich nach der Granulierung eine Fraktionierung des erzeugten pedosphärenverbessernde Granulate anschließt, wobei eine Grobfraktion und/oder eine Feinfraktion aufgemahlen und der Grunddispersion, der Gesamtdispersion oder der Granulierung zumindest teilweise zuführbar ist.

11. Granulat nach einem oder mehreren der Ansprüche 1 oder 3 bis 10 oder Verfahren einem oder mehreren der Ansprüche 2 bis 10,
**dadurch gekennzeichnet, dass**
- eine erdfeuchte Gesamtdispersion mit einem Feuchtegehalt von 5 % bis 40 % erzeugt wird und die Granulierung mit einem Granulierteller oder Intensivmischer
- oder eine Gesamtdispersion in Form einer Suspension mit einem Feststoffgehalt von weniger als 60 % erzeugt wird und die Granulierung in einem Wirbelschicht- oder Strahlschichtreaktor
erfolgt.

12. Verwendung einer Vorrichtung zur Herstellung von Granulaten nach einem der vorangehenden Ansprüchen 1 oder 3 bis 11, wobei
die Vorrichtung mindestens einen ersten Mischbehälter und mindestens eine Granulier- und/oder Extrudiereinheit umfasst, und wobei
• in dem mindestens einen ersten Mischbehälter, zumindest ein kohlenstoffhaltiger Strukturstoff mit einem Kohlenstoffanteil von größer 5%
- nämlich Torf, Humus und/oder Biokohle aus der hydrothermalen Carbonisierung (HTC) oder kohlenstoffhaltige Reststoffe ausgewählt aus Klärschlämmen, Gärresten, Gülle, Tierausscheidungen, Tier- und Fischmehlen,
und weiterhin mindestens ein anorganisches Sekundärphosphat,
- nämlich Aschen und/oder Schlacken aus der Mono- oder Mitverbrennung von Klärschlamm, Tierausscheidungen, Tiermehl, Gülle und/oder Gärresten als Einzelstoff bzw. als Gemische daraus,
in Kombination mit mindestens einem Reaktionsmittel,
- nämlich organische oder anorganische Säuren oder Säuregemische oder Laugen oder Gemische aus unterschiedlichen Laugen,
zugeführt und vermischt werden, wobei im Falle der Zuführung von einem anorganischen Sekundärphosphat in Kombination mit einem Reaktionsmittel für die erforderliche Inkubationszeit entweder dieser erste Mischbehälter genutzt wird und/oder dafür weitere Behälter vorgesehen sind, in die die Grund- oder Gesamtdispersion für die Inkubationszeit überführt und gemischt wird,
die Gesamtdispersion mit der mindestens einen Granulier- und/oder Extrudiereinheit granuliert oder extrudiert wird,
wobei die Granulier- und/oder Extrudiereinheit entweder der erste Mischbehälter oder in oder an diesem integriert ist oder von dem ersten Mischbehälter separat ist, wobei bei einer vom ersten Mischbehälter separaten Granulier- und/oder Extrudiereinheit mindestens eine Zuführungseinheit der Grunddispersion oder Gesamtdispersion an der Granulier- und/oder Extrudiereinheit vorhanden ist und mindestens eine weitere Zuführungseinheit für weitere Komponenten ist.

13. Beschichtetes oder unbeschichtetes Düngergranulat
**dadurch gekennzeichnet, dass**
das Düngergranulat mindestens ein anorganisches Sekundärphosphat,
- nämlich Aschen und/oder Schlacken aus der Mono- oder Mitverbrennung von Klärschlamm, Tierausscheidungen, Tiermehl, Gülle und/oder Gärresten als Einzelstoff bzw. als Gemische daraus,
und mindestens einen Kohlenstoffanteil von 0,1 % umfasst,
wobei das Granulat mindestens einen Kohlenstoffanteil aufweist, der aus einem kohlenstoffhaltigen Strukturstoff ausgewählt aus Torf, Humus und/oder Bio-Kohle aus der hydrothermalen Carbonisierung (HTC) oder kohlenstoffhaltige Reststoffe ausgewählt aus Klärschlämmen, Gärresten, Gülle, Tierausscheidungen, Tier- und Fischmehlen stammt,
- sowie einen größer 60 % neutral-ammoniumcitratlöslichen P₂O₅-Anteil bezogen auf den Gesamtphosphatgehalt im Düngergranulat
- oder einen größer 60 % neutral-ammoniumcitratlöslichen und kleiner 40 % wasserlöslichen P₂O₅-Anteil bezogen auf den Gesamtphosphatgehalt im Düngergranulat aufweist.

14. Beschichtetes oder unbeschichtetes Düngergranulat nach Anspruch 13
**dadurch gekennzeichnet, dass**
das Düngergranulat in Summe 0,1 bis 25 % Huminsäure, Fulvosäure, deren Salze und/oder in Summe 0,1 bis 30 % organische Säure und/oder ein oder mehrere Kristallisationsprodukte aus der Phosphorelimination einen Konzentrationsbereich zwischen 1 bis 70 % aufweist.

15. Verwendung des Düngergranulats nach einem oder mehreren der Ansprüche 13 bis 14 zur Nährstoffzufuhr in der Land-, Forstwirtschaft und/oder im Gartenbau **dadurch gekennzeichnet, dass**
das Düngergranulat mindestens ein anorganisches Sekundärphosphat umfasst, sowie einen größer 60 % neutral-ammoniumcitratlöslichen P₂O₅-Anteil.

## Claims

1. Pedosphere-improving granules with a phosphate content that is greater than 60% soluble in neutral ammonium citrate, producible by a method comprising the steps:
a) preparing a total dispersion comprising at least one carbon-containing structural component with a carbon content greater than 5%
- namely, peat, humus, and/or biochar from hydrothermal carbonization (HTC) or carbon-containing residues selected from sewage sludge, fermentation residues, liquid manure, animal excrement, animal and fish meal, and
b) further comprising at least one inorganic secondary phosphate,
- namely, ash and/or slag from the mono- or co-incineration of sewage sludge, animal excrement, animal meal, liquid manure and/or fermentation residues as individual substances or as mixtures thereof,
in combination with at least one reactive agent,
- namely, organic or inorganic acids or acid mixtures or alkalis or mixtures of different alkalis,
and
c) performing granulation or extrusion.

2. A method for producing pedosphere-improving granulates with a phosphate content that is greater than 60% soluble in neutral ammonium citrate, comprising the steps:
a) preparing a total dispersion comprising at least one carbon-containing structural component with a carbon content greater than 5%
- namely, peat, humus, and/or biochar from hydrothermal carbonization (HTC) or carbon-containing residues selected from sewage sludge, fermentation residues, liquid manure, animal excrement, animal and fish meal, and
b) further comprising at least one inorganic secondary phosphate,
- namely, ash and/or slag from the mono- or co-incineration of sewage sludge, animal excrement, animal meal, liquid manure and/or fermentation residues as individual substances or as mixtures thereof,
in combination with at least one reactive agent,
- namely, organic or inorganic acids or acid mixtures or alkalis or mixtures of different alkalis,
and
c) performing granulation or extrusion.

3. The granules according to claim 1, or the method according to claim 2,
**characterized in that**
organic acids are added during the preparation of a total dispersion.

4. The granules according to any one or more of claim 1 or 3, or the method according to any one or more of claim 2 or 3,
**characterized in that**
the reactant comprises organic acids.

5. The granules according to any one or more of claims 1 or 3 to 4, or the method according to any one or more of claims 2 to 4,
**characterized in that**
at least the inorganic secondary phosphate and at least the reagent are added to a basic dispersion, wherein an incubation time between the inorganic secondary phosphate and the reagent of between 10 and 500 minutes is maintained, wherein the solubility in neutral ammonium citrate of the phosphate supplied with the inorganic secondary phosphate is increased by reaction with the at least one reagent and the P₂O₅ content from the inorganic secondary phosphate in the fertilizer granules is greater than 60% neutral ammonium citrate soluble.

6. The granules according to any one or more of claims 1 or 3 to 5, or the method according to any one or more of claims 2 to 5,
**characterized in that**
the pedosphere-improving granules have a carbon content of 5 to 50% or a carbon content of 0.1 to less than 5%.

7. The granules according to any one or more of claims 1 or 3 to 6, or the method according to any one or more of claims 2 to 6,
**characterized in that**
the total dispersion contains a total of 1 to 70% crystallization products based on the finished pedosphere-improving granules from phosphorus elimination.

8. The granules according to any one or more of claims 1 or 3 to 7, or the method according to any one or more of claims 2 to 7,
**characterized in that**
drying takes place at temperatures above 100°C relative to the material temperature.

9. The granules according to any one or more of claims 1 or 3 to 8, or the method according to any one or more of claims 2 to 8,
**characterized in that**
the pH value of the total dispersion is in a range of 4-8.

10. The granules according to any one or more of claims 1 or 3 to 9, or the method according to any one or more of claims 2 to 9,
**characterized in that**
following granulation, the produced pedosphere-improving granules are fractionated, wherein a coarse fraction and/or a fine fraction is ground up and can be at least partially added to the basic dispersion, the total dispersion, or the granulation.

11. The granules according to any one or more of claims 1 or 3 to 10, or the method according to any one or more of claims 2 to 10,
**characterized in that**
- an earth-moist total dispersion with a moisture content of 5% to 40% is produced and the granulation is performed with a granulating disc or intensive mixer
- or a total dispersion in the form of a suspension with a solids content of less than 60% is produced and granulation takes place in a fluidized bed or jet bed reactor.

12. A use of a device for the production of granules according to any one of the preceding claims 1 or 3 to 11, wherein
the device comprises at least one first mixing vessel and at least one granulation and/or extrusion unit, and wherein
• in the at least one first mixing vessel, at least one carbon-containing structural material with a carbon content greater than 5%
- namely, peat, humus, and/or biochar from hydrothermal carbonization (HTC) or carbon-containing residues selected from sewage sludge, fermentation residues, liquid manure, animal excrement, animal and fish meal,
and further at least one inorganic secondary phosphate
- namely, ash and/or slag from the mono- or co-incineration of sewage sludge, animal excrement, animal meal, liquid manure and/or fermentation residues as individual substances or as mixtures thereof,
in combination with at least one reactive agent,
- namely, organic or inorganic acids or acid mixtures or alkalis or mixtures of different alkalis,
are added and mixed, wherein in the case of adding an inorganic secondary phosphate in combination with a reagent for the required incubation time, either this first mixing container is used and/or further containers are provided into which the basic or total dispersion is transferred and mixed for the incubation time,
the total dispersion is granulated or extruded with the at least one granulation and/or extrusion unit,
wherein the granulation and/or extrusion unit is either the first mixing vessel or integrated in or on it, or is separate from the first mixing vessel, wherein in the case of a granulation and/or extrusion unit separate from the first mixing vessel, at least one feed unit of the basic dispersion or total dispersion is present on the granulation and/or extrusion unit and at least one further feed unit is for further components.

13. Coated or uncoated fertilizer granules,
**characterized in that**
the fertilizer granules comprise at least one inorganic secondary phosphate,
- namely, ash and/or slag from the mono- or co-incineration of sewage sludge, animal excrement, animal meal, liquid manure and/or fermentation residues as individual substances or as mixtures thereof,
and at least a carbon content of 0.1%,
wherein the granules have at least a carbon content derived from a carbon-containing structural material selected from peat, humus, and/or biochar from hydrothermal carbonization (HTC) or carbon-containing residues selected from sewage sludge, digestate, manure, animal excrement, animal and fish meal,
- as well as a P₂O₅ content greater than 60% soluble in neutral ammonium citrate, based on the total phosphate content in the fertilizer granules
- or have a P₂O₅ content greater than 60% soluble in neutral ammonium citrate and less than 40% soluble in water, based on the total phosphate content in the fertilizer granules.

14. The coated or uncoated fertilizer granules according to claim 13,
**characterized in that**
the fertilizer granules contain a total of 0.1 to 25% humic acid, fulvic acid, their salts and/or a total of 0.1 to 30% organic acid and/or one or more crystallization products from phosphorus elimination, at a concentration range between 1 and 70%.

15. The use of the fertilizer granules according to any one or more of claims 13 to 14 for nutrient supply in agriculture, forestry, and/or horticulture,
**characterized in that**
the fertilizer granules comprises at least one inorganic secondary phosphate as well as a P₂O₅ content greater than 60% soluble in neutral ammonium citrate.

## Revendications

1. Granulat améliorant la pédosphère, comportant une teneur en phosphate soluble à plus de 60 % dans le citrate d'ammonium neutre, pouvant être fabriqué à l'aide d'un procédé comprenant les étapes suivantes :
a) la production d'une dispersion totale comprenant au moins un composant structurel contenant du carbone et comportant une teneur en carbone supérieure à 5 %
- à savoir la tourbe, l'humus et/ou le biochar issus de la carbonisation hydrothermale (HTC) ou des résidus contenant du carbone sélectionnés parmi les boues d'épuration, le digestat, le fumier, les excréments animaux, les farines animales et de poisson et
b) comprenant en outre au moins un phosphate secondaire inorganique,
- à savoir les cendres et/ou les scories issues de la mono-incinération ou co-incinération des boues d'épuration, des excréments animaux, des farines animales, du fumier et/ou du digestat, en tant que substances individuelles ou en tant que mélanges de ceux-ci,
en combinaison avec au moins un agent réactif,
- à savoir les acides organiques ou inorganiques ou les mélanges d'acides ou les alcalis ou les mélanges de différents alcalis, et
c) la réalisation d'une granulation ou d'une extrusion.

2. Procédé de fabrication d'un granulat améliorant la pédosphère et comportant une teneur en phosphate soluble à plus de 60 % dans le citrate d'ammonium neutre, comprenant les étapes suivantes :
a) la production d'une dispersion totale comprenant au moins un composant structurel contenant du carbone et comportant une teneur en carbone supérieure à 5 %
- à savoir la tourbe, l'humus et/ou le biochar issus de la carbonisation hydrothermale (HTC) ou des résidus contenant du carbone sélectionnés parmi les boues d'épuration, le digestat, le fumier, les excréments animaux, les farines animales et de poisson et
b) comprenant en outre au moins un phosphate secondaire inorganique,
- à savoir les cendres et/ou les scories issues de la mono-incinération ou co-incinération des boues d'épuration, des excréments animaux, des farines animales, du fumier et/ou du digestat, en tant que substances individuelles ou en tant que mélanges de ceux-ci,
en combinaison avec au moins un agent réactif,
- à savoir les acides organiques ou inorganiques ou les mélanges d'acides ou les alcalis ou les mélanges de différents alcalis, et
c) la réalisation d'une granulation ou d'une extrusion.

3. Granulat selon la revendication 1 ou procédé selon la revendication 2,
**caractérisé en ce que**
des acides organiques sont ajoutés lors de la production d'une dispersion totale.

4. Granulat selon l'une ou plusieurs des revendications 1 ou 3 ou procédé selon l'une ou plusieurs des revendications 2 ou 3,
**caractérisé en ce que**
l'agent réactif comprend des acides organiques.

5. Granulat selon l'une ou plusieurs des revendications 1 ou 3 à 4 ou procédé selon l'une ou plusieurs des revendications 2 à 4,
**caractérisé en ce que**
au moins le phosphate secondaire inorganique et au moins l'agent réactif sont ajoutés à une dispersion de base, dans lequel un temps d'incubation compris entre 10 et 500 minutes est maintenu entre le phosphate secondaire inorganique et l'agent réactif, ce qui augmente, par réaction avec l'au moins un agent réactif, la solubilité dans le citrate d'ammonium neutre du phosphate ajouté avec le phosphate secondaire inorganique et plus de 60 % de la teneur en P₂O₅ provenant du phosphate secondaire inorganique dans le granulat d'engrais est soluble dans le citrate d'ammonium neutre.

6. Granulat selon l'une ou plusieurs des revendications 1 ou 3 à 5 ou procédé selon l'une ou plusieurs des revendications 2 à 5
**caractérisé en ce que**
le granulat améliorant la pédosphère contient une teneur en carbone de 5 à 50 % ou une teneur en carbone de 0,1 à moins de 5 %.

7. Granulat selon l'une ou plusieurs des revendications 1 ou 3 à 6 ou procédé selon l'une ou plusieurs des revendications 2 à 6,
**caractérisé en ce que**
la dispersion totale contient un total de 1 à 70 % de produits de cristallisation issus d'une élimination du phosphore par rapport au granulat améliorant la pédosphère fini.

8. Granulat selon l'une ou plusieurs des revendications 1 ou 3 à 7 ou procédé selon l'une ou plusieurs des revendications 2 à 7,
**caractérisé en ce que**
un séchage à plus de 100 °C par rapport à la température du matériau est réalisé.

9. Granulat selon l'une ou plusieurs des revendications 1 ou 3 à 8 ou procédé selon l'une ou plusieurs des revendications 2 à 8,
**caractérisé en ce que**
la valeur de pH de la dispersion totale se situe dans une plage de 4 à 8.

10. Granulat selon l'une ou plusieurs des revendications 1 ou 3 à 9 ou procédé selon l'une ou plusieurs des revendications 2 à 9,
**caractérisé en ce que**
après la granulation, un fractionnement du granulat améliorant la pédosphère produit est réalisé, dans lequel une fraction grossière et/ou une fraction fine sont broyées et peuvent être ajoutées au moins partiellement à la dispersion de base, à la dispersion totale ou à la granulation.

11. Granulat selon l'une ou plusieurs des revendications 1 ou 3 à 10 ou procédé selon l'une ou plusieurs des revendications 2 à 10,
**caractérisé en ce que**
- une dispersion totale humide comportant une teneur en humidité de 5 % à 40 % est produite et la granulation est produite à l'aide d'un disque de granulation ou d'un mélangeur intensif
- ou une dispersion totale sous la forme d'une suspension comportant une teneur en matières solides inférieure à 60 % est produite et la granulation est réalisée dans un réacteur à lit fluidisé ou à lit à jet.

12. Utilisation d'un dispositif de fabrication de granulats selon l'une des revendications 1 ou 3 à 11 précédentes, dans laquelle
le dispositif comprend au moins une première cuve de mélange et au moins une unité de granulation et/ou d'extrusion, et dans laquelle
• dans l'au moins une première cuve de mélange sont ajoutés et mélangés au moins un matériau structurel contenant du carbone et comportant une teneur en carbone supérieure à 5 %
- à savoir la tourbe, l'humus et/ou le biochar issus de la carbonisation hydrothermale (HTC) ou des résidus contenant du carbone sélectionnés parmi les boues d'épuration, le digestat, le fumier, les excréments animaux et les farines animales et de poisson,
et en outre au moins un phosphate secondaire inorganique,
- à savoir les cendres et/ou les scories issues de la mono-incinération ou co-incinération des boues d'épuration, des excréments animaux, des farines animales, du fumier et/ou du digestat,en tant que substances individuelles ou en tant que mélanges de ceux-ci,
en combinaison avec au moins un agent réactif,
- à savoir les acides organiques ou inorganiques ou les mélanges d'acides ou les alcalis ou les mélanges de différents alcalis, dans laquelle, dans le cas de l'ajout d'un phosphate secondaire inorganique en combinaison avec un agent réactif pour le temps d'incubation requis, soit la première cuve de mélange est utilisée, et/ou soit d'autres cuves sont prévues, dans lesquelles la dispersion de base ou totale est transférée et mélangée pendant le temps d'incubation,
la dispersion totale est granulée ou extrudée à l'aide d'au moins une unité de granulation et/ou d'extrusion,
dans laquelle l'unité de granulation et/ou d'extrusion est la première cuve de mélange, ou bien est intégrée dans ou à ceux-ci, ou bien est séparée de la première cuve de mélange, dans laquelle, dans le cas d'une unité de granulation et/ou d'extrusion séparée de la première cuve de mélange, au moins une unité d'ajout de la dispersion de base ou de la dispersion totale est présente sur l'unité de granulation et/ou d'extrusion et au moins une autre unité d'ajout est prévue pour d'autres composants.

13. Granulat d'engrais enrobé ou non enrobé
**caractérisé en ce que**
le granulat d'engrais comprend au moins un phosphate secondaire inorganique,
- à savoir les cendres et/ou les scories issues de la mono-incinération ou co-incinération des boues d'épuration, des excréments animaux, des farines animales, du fumier et/ou du digestat, en tant que substances individuelles ou en tant que mélanges de ceux-ci,
et au moins une teneur en carbone de 0,1 %,
dans lequel le granulat présente au moins une teneur en carbone dérivée d'un matériau structurel contenant du carbone sélectionné parmi la tourbe, l'humus et/ou le biochar issus de la carbonisation hydrothermale (HTC) ou des résidus contenant du carbone sélectionnés parmi les boues d'épuration, le digestat, le fumier, les excréments d'animaux, les farines animales et de poisson,
- ainsi qu'une teneur en P₂O₅ soluble à plus de 60 % dans le citrate d'ammonium neutre, par rapport à la teneur totale en phosphate du granulat d'engrais
- ou une teneur en P₂O₅ soluble à plus de 60 % dans le citrate d'ammonium neutre et à moins de 40 % dans l'eau par rapport à la teneur totale en phosphate du granulat d'engrais.

14. Granulat d'engrais enrobé ou non enrobé selon la revendication 13
**caractérisé en ce que**
le granulat d'engrais présente au total une teneur de 0,1 à 25 % en acide humique, en acide fulvique, en sels de ceux-ci et/ou au total une teneur de 0,1 à 30 % en acide organique et/ou un ou plusieurs produits de cristallisation issus de l'élimination du phosphore dans une plage de concentrations comprise entre 1 et 70 %.

15. Utilisation du granulat d'engrais selon l'une ou plusieurs des revendications 13 à 14 pour l'apport d'éléments nutritifs dans l'agriculture, la sylviculture et/ou l'horticulture
**caractérisée en ce que**
le granulat d'engrais comprend au moins un phosphate secondaire inorganique, ainsi qu'une teneur en P₂O₅ soluble à plus de 60 % dans le citrate d'ammonium neutre.
